# EUROPEAN PATENT APPLICATION

(11) **EP 4 761 000 A2**
(43) Date of publication of application: **17.06.2026**
(21) Application number: 24885061.2
(22) Date of filing: 31.12.2024
(51) Int. Cl.: H01R 13/02, H01R 43/16, H05K 5/03, H01M 10/42

(54) **HIGH-VOLTAGE POWER DISTRIBUTION DEVICE AND FORMING METHOD FOR HOUSING STRUCTURE THEREOF, AND BATTERY DEVICE AND ELECTRIC APPARATUS**

(30) Priority: 31.10.2023 CN 202322933204 U; 29.11.2023 CN 202323249361 U; 19.02.2024 CN 202420304927 U; 16.07.2024 CN 202421675064 U
(71) Applicant: Contemporary Amperex Technology Co., Limited, Ningde, Fujian 352100 (CN)
(72) Inventor: QIU, Guanda, Ningde, Fujian 352100 (CN); LI, Yuanxin, Ningde, Fujian 352100 (CN); WANG, Chong, Ningde, Fujian 352100 (CN)
(74) Representative: Lorenz Seidler Gossel Part. mbB
(86) International application number: PCT/CN2024/144600
(87) International publication number: WO 2025/093066

(57) **Abstract**

The present application belongs to the technical field of batteries, and specifically relates to a high-voltage power distribution device and a forming method for a housing structure thereof, and a battery device and an electric apparatus. The high-voltage power distribution device comprises a first housing, and the first housing comprises a housing main body and a plurality of electrical connection members, wherein the housing main body is an insulated member; each electrical connection member comprises an inner main body portion embedded in the housing main body, and a first connection portion exposed to a surface of the housing main body; a spacing area is formed between every two adjacent main body portions; the surface of the housing main body is recessed inwardly to form several recessed holes; and a cavity area is formed at the position between every two adjacent main body portions by means of the recessed hole. A connection rib can be provided at the position of the spacing area that corresponds to the recessed hole, so as to connect adjacent main body portions, and after injection molding, the connection rib is disconnected at the position of the recessed hole to separate the two main body portions; and the adjacent electrical connection members can be positioned and connected by means of the connection rib, and the connection rib can play a role in positioning and supporting, such that the plurality of electrical connection members can be integrally injection molded as an integral member with the housing main body, thus facilitating an increase in the machining efficiency.

## Description

The present application claims priority to Chinese Patent Application No. 202322933204.8, filed on October 31, 2023 and entitled "Conductor Structure, Housing Structure, Electrical Control Apparatus, Battery, and Electric Device", Chinese Patent Application No. 202420304927.3, filed on February 19, 2024 and entitled "Cover Structure, Battery Pack, and Electric Apparatus", Chinese Patent Application No. 202421675064.7, filed on July 16, 2024 and entitled "High-Voltage Box, Battery Device, and Electric Apparatus", and Chinese Patent Application No. 202323249361.3, filed on November 29, 2023 and entitled "High-Voltage Power Distribution Device, Battery, and Electric Device", which are incorporated herein by reference in their entireties.

### TECHNICAL FIELD

The present application pertains to the technical field of batteries, and in particular, relates to a high-voltage power distribution device and a forming method for a housing structure thereof, and a battery device and an electric apparatus.

### BACKGROUND

With the development of science and technology, new energy electric vehicles have gradually become popular. A battery device is one of the core components of an electric vehicle, and is an energy hub for the electric vehicle. Battery technology is an important factor regarding the development of electric vehicles.

A battery device is equipped with a high-voltage power distribution device, and the assembly efficiency of each component of the high-voltage power distribution device directly affects the overall assembly efficiency of the battery device.

The above statement merely provides the background information related to the present application and do not necessarily constitute the prior art.

### SUMMARY

An objective of embodiments of the present application is to provide a high-voltage power distribution device and a forming method for a housing structure thereof, a battery device and an electric apparatus, so as to improve the assembly efficiency of the high-voltage power distribution device.

An embodiment of the present application adopts the technical solutions below:
According to a first aspect, provided is a high-voltage power distribution device, comprising a first housing, the first housing comprising:
A housing main body, the housing main body being an insulated member; and
A plurality of electrical connection members, each of the electrical connection members comprising a main body portion and a first connection portion led out from the main body portion, the main body portions all being embedded into the housing main body, and the first connection portions being spaced apart from each other and exposed to a surface of the housing main body, wherein
The plurality of electrical connection members are arranged at intervals from each other and form a spacing area between two adjacent main body portions, the surface of the housing main body is recessed inwardly to form several recessed holes, at least some of the recessed holes are located in the spacing area, and each spacing area corresponds to at least one of the recessed holes.

According to the technical solutions in the embodiments of the present application, the main body portions of the electrical connection members are embedded into the housing main body, and the main body portions are tightly combined with the housing main body, such that the electrical connection members can be firmly and stably fastened to the housing main body, and the electrical connection members and the housing main body, i.e., a first housing, act as an integral member to be disassembled from or assembled with another structure, thereby simplifying an assembly process and improving assembly efficiency. On this basis, the housing main body is further provided with several recessed hole structures. Some or all of recessed holes are located between main body portions of two adjacent electrical connection members. In addition, each spacing area is disposed corresponding to at least one recessed hole. In this way, a part of a cavity area is formed by means of the recessed hole at a position between two adjacent main body portions. Before the first housing is injection molded and formed, a connection rib may be disposed at a position of the spacing area corresponding to the recessed hole, to connect the two adjacent main body portions. After injection molding is completed, the connection rib is disconnected at the position of the recessed hole, such that the two adjacent main body portions are electrically separated. In this way, before injection molding and during injection molding, the two adjacent electrical connection members may be positioned and connected by means of providing the connection rib, and the connection rib can play a role in positioning and supporting the adjacent electrical connection members, such that the plurality of electrical connection members can be integrally injection molded as integral members with the housing main body. During injection molding, no relative positional movement occurs between the electrical connection members, the disposed positions of the electrical connection members are more accurate, and a risk of an internal short circuit is reduced. After injection molding, the connection rib is disconnected from the recessed hole, to disconnect the connection rib between the two adjacent main body portions, i.e., the two adjacent electrical connection members, such that the two electrical connection members are insulated from each other, and the electrical connection members have a normal connection function and can establish connections to other electrical connection structures inside and outside the high-voltage power distribution device, thereby improving the assembly efficiency of the high-voltage power distribution device and providing a guarantee of stable operation of the high-voltage power distribution device.

In some embodiments, the two main body portions are arranged at an interval along a first direction, and the two main body portions are located at two opposite sides of the corresponding recessed hole along the first direction, respectively.

According to the technical solutions in the embodiments, two adjacent main bodies are disposed close to two opposite side edges of the recessed hole, such that most or all of connection ribs disposed in advance between the two main body portions can directly face the recessed hole, and most or all of the connection ribs can be removed by means of the recessed hole, so as to maximize an insulation distance between the two adjacent main body portions.

In some embodiments, at least three of the main body portions are sequentially arranged at intervals along the first direction, and the at least three sequentially arranged main body portions correspond to the same recessed hole.

According to the technical solutions in the embodiments, the connection ribs between three or more main body portions are disposed corresponding to the same recessed hole, such that two or more connection ribs can be disconnected at the position of the same recessed hole, thereby helping simplify the forming step and improve the forming efficiency of the first housing.

In some embodiments, along the first direction, the size of a portion of the main body portion located on a side portion of the recessed hole and protruding from a hole edge of the recessed hole is less than or equal to 1 mm.

According to the technical solutions in the embodiments, the first direction is a width direction of the main body portion, the main body portion located on the side portion of the recessed hole can be effectively blocked by the housing main body, and the main body portion is exposed to internal space of the recessed hole only by a width of approximately 1 mm, such that a sufficient spacing can be reserved between two adjacent main body portions to meet an electrical insulation requirement.

In some embodiments, the housing main body is provided with a plurality of recessed holes spaced apart, and among all of the spacing areas, at least some of the spacing areas correspond to a plurality of the recessed holes along an extension direction of the corresponding main body portion, respectively.

According to the technical solutions in the embodiments, for some main body portions having a long length extension dimension, a plurality of connection ribs can be disposed at intervals along the length extension direction of the main body portions to support the two main body portions, thereby helping further reduce a risk of movement of the electrical connection member and improve the position accuracy after formation.

In some embodiments, a spacing distance between parts of the two adjacent main body portions located on an inner side of the hole edge of the same recessed hole is greater than 3 mm.

According to the technical solutions in the embodiments, when two adjacent electrical connection members are connected to a low-voltage loop, and the parts of the two adjacent main body portions located at the position of the recessed hole are not separated by an insulating component, the spacing distance between the two adjacent main body portions located in the same recessed hole is greater than 3 mm, such that a clearance distance between the two adjacent main body portions is greater than 3 mm, so as to meet an insulation requirement.

In some embodiments, the spacing distance between the parts of the two adjacent main body portions located on the inner side of the hole edge of the same recessed hole is greater than 9.5 mm.

According to the technical solutions in the embodiments, when two adjacent electrical connection members are connected to a high-voltage loop, and the parts of the two adjacent main body portions located at the position of the recessed hole are not separated by an insulating component, the spacing distance between the two adjacent main body portions located in the same recessed hole is greater than 9.5 mm, such that a clearance distance between the two adjacent main body portions is greater than 9.5 mm, so as to meet an insulation requirement.

In some embodiments, a spacing distance between parts of the two adjacent main body portions located on an inner side of the hole edge of the same recessed hole is greater than 19 mm.

According to the technical solutions in the embodiments, when two adjacent electrical connection members are connected to a higher-voltage loop, and the parts of the two adjacent main body portions located at the position of the recessed hole are not separated by an insulating component, the spacing distance between the two adjacent main body portions located in the same recessed hole is greater than 19 mm, such that a clearance distance between the two adjacent main body portions is greater than 19 mm, so as to meet an insulation requirement.

In some embodiments, the housing main body has a first surface and a second surface that are oppositely disposed, the main body portion is located between the first surface and the second surface, the recessed hole penetrates through the first surface and the second surface, and each spacing area penetrates through the first surface and the second surface by means of the corresponding recessed hole.

According to the technical solutions in the embodiments, because the recessed hole penetrates through the housing main body, after the first housing is injection molded and cooled, the connection rib can be disconnected directly at the position of the through hole, and the connection rib is disconnected without needing to consider the impact on a hole bottom portion of the recessed hole, making the forming process simpler and more efficient.

In some embodiments, the high-voltage power distribution device further comprises a second housing connected to the first housing, some of the recessed holes are first holes, the second housing is provided with at least one insulating protrusion at a position corresponding to each of the first holes, the insulating protrusion is inserted into the first hole at a position between the two adjacent main body portions, and at least one of the insulating protrusions is provided between the two adjacent main body portions that correspond to the same first hole.

According to the technical solutions in the embodiments, the high-voltage power distribution device further comprises the second housing connected to the first housing, and the second housing is provided with the insulating protrusion at the position corresponding to each of the first holes. When the first housing is connected to the second housing, the insulating protrusion can be inserted into the first hole from the position between the two adjacent main body portions, thereby correspondingly separating the two adjacent main body portions, such that the two adjacent main body portions can be insulated by means of the insulating protrusion inserted therebetween.

In some embodiments, along the direction from the second surface toward the first surface, the insulating protrusion extends into the first hole from the second surface, and the height of a protruding part of the insulating protrusion relative to the second surface is greater than the heights of protruding parts of the corresponding two main body portions relative to the second surface.

According to the technical solutions in the embodiments, the two adjacent main body portions are disposed at two sides of the corresponding insulating protrusion, respectively, and a current needs to creep across the corresponding insulating protrusion to reach the main body portion on the other side from the main body portion on one side, such that the two main body portions can be insulated from each other.

In some embodiments, one of the insulating protrusions is provided between the two adjacent main body portions; along a spacing direction between the two adjacent main body portions, the thickness of the insulating protrusion is L1, and spacing distances between the insulating protrusion and the two adjacent main body portions are L2 and L3, respectively, and along the direction from the second surface toward the first surface, the heights of protruding parts of the insulating protrusion relative to the two adjacent main body portions are L4 and L5, respectively, wherein the sum of L1, L2, L3, L4, and L5 is greater than 3 mm.

According to the technical solutions in the embodiments, when two adjacent electrical connection members are connected to a low-voltage loop, a creepage distance between the two adjacent main body portions located in the same recessed hole is greater than 3 mm, so as to meet an insulation requirement.

In some embodiments, the sum of L1, L2, L3, L4, and L5 is greater than 9.5 mm.

According to the technical solutions in the embodiments, when two adjacent electrical connection members are connected to a high-voltage loop, a creepage distance between the two adjacent main body portions located in the same recessed hole is greater than 9.5 mm, so as to meet an insulation requirement.

In some embodiments, the sum of L1, L2, L3, L4, and L5 is greater than 19 mm.

According to the technical solutions in the embodiments, when two adjacent electrical connection members are connected to a higher-voltage loop, a creepage distance between the two adjacent main body portions located in the same recessed hole is greater than 19 mm, so as to meet an insulation requirement.

In some embodiments, the spacing distance between the insulating protrusion and the adjacent main body portion is greater than or equal to 1 mm.

According to the technical solutions in the embodiments, there is a spacing distance of at least 1 mm between the insulating protrusion and the main body portion adjacent to the insulating protrusion, such that the insulating protrusion can smoothly extend out of the first hole without interfering with the corresponding main body portion.

In some embodiments, along a direction perpendicular to the spacing direction between the two adjacent main body portions, at least one of two opposite side walls of the first hole is provided with a recess, and a side portion of the insulating protrusion corresponding to the recess is clamped into the recess.

According to the technical solutions in the embodiments, at least one side of the insulating protrusion can be clamped into the corresponding recess on the hole wall of the first hole, and the insulating protrusion can be positioned by means of the recess, thereby helping further improve assembly accuracy.

In some embodiments, in the direction perpendicular to the spacing direction between the two adjacent main body portions, each of the two opposite sidewalls of the first hole is provided with the recess, and two opposite side portions of the insulating protrusion are clamped into the corresponding recesses, respectively.

In some embodiments, the width dimension of the recessed hole is 4 mm to 6 mm along the direction perpendicular to the spacing direction between the two adjacent main body portions.

According to the technical solutions in the embodiments, the width dimension of the recessed hole is within the above-mentioned dimension range, such that the width of the recessed hole can accommodate the connection rib having the specific width, and a specific gap can be reserved between the connection rib and the hole edge for a cutting tool to extend into to cut off the connection rib. In addition, the structural strength of the housing main body is not reduced due to an excessively large opening of the recessed hole.

In some embodiments, the housing main body is further provided with an interface for adaptive insertion of an external electrical connector, the interface has an accommodating cavity penetrating through the surface of the housing main body, each of the electrical connection members further comprises a second connection portion, the second connection portion is exposed to a cavity wall surface of the accommodating cavity and is located in the accommodating cavity, and the second connection portion is used to electrically connect to the electrical connector inserted into the interface.

According to the technical solutions in the embodiments, the first housing is provided with the interface adapted to the external electrical connector, the electrical connector can be adaptively inserted into the interface, the second connection portion of each electrical connection member is led into the internal accommodating cavity of the interface, and each second connection portion is exposed to the cavity wall surface of the accommodating cavity of the interface. When the external electrical connector is inserted into the interface, a connection terminal in the electrical connector is in electrical contact with the corresponding second connection portion, such that each electrical connection member is in communication with an external circuit by means of the corresponding electrical connector.

In some embodiments, the second connection portion protrudes from the cavity wall surface of the accommodating cavity and is disposed facing an opening of the accommodating cavity.

According to the technical solutions in the embodiments, the second connection portion is suspended in the accommodating cavity of the interface, such that the interface as a whole can function as a male connector to be adaptively inserted into an external female connector; arrangement of the overall structure of the interface is simpler, and the connection mode with the external electrical connector is quite direct.

In some embodiments, some of the electrical connection members are first connection members, the others of the electrical connection members are second connection members, the interface comprises a first interface and a second interface that are disposed at an interval, the second connection portion of each of the first connection members is located in the accommodating cavity of the first interface, and the second connection portion of each of the second connection members is located in the accommodating cavity of the second interface.

According to the technical solutions in the embodiments, the first housing is provided with the first interface and the second interface, wherein the electrical connection member comprises at least one first connection member and at least one second connection member, the second connection portion of each first connection member is correspondingly located in the accommodating cavity of the first interface, and the second connection portion of each second connection member is correspondingly located in the accommodating cavity of the second interface, such that the first connection member and the second connection member are connected to corresponding circuits, respectively, by means of connecting the first interface and the second interface to the corresponding external connectors. In this way, different electrical connection members can be distinguished and isolated in space, thereby helping reduce a risk of electrical interference or connection confusion.

In some embodiments, the first interface and the second interface are disposed at the same side of the housing main body, or the first interface and the second interface are disposed at different sides of the housing main body.

According to the technical solutions in the embodiments, the first interface and the second interface are disposed at the same side of the housing main body, that is, the first interface and the second interface are plugged with the external electrical connector at the same side of the high-voltage power distribution device. This facilitates centralized connection with the external electrical connector, thereby helping simplify the layout of external connection lines, reduce line crossing and confusion, and improve connection regularity and reliability. Alternatively, the first interface and the second interface are disposed at different sides of the housing main body, that is, the first interface is disposed at one side portion of the housing main body, the second interface is disposed at the other side portion of the housing main body, and the first interface and the second interface are located at different sides of the housing main body in space, such that the first interface and the second interface can better adapt to connection requirements of external electrical connectors at different positions, and connection is more flexible and convenient.

In some embodiments, the first connection portion of each of the first connection members is connected to a low-voltage loop in the high-voltage power distribution device, and/or the first connection portion of each of the second connection members is connected to a high-voltage loop in the high-voltage power distribution device.

In some embodiments, in the first interface, a clearance distance between two adjacent second connection portions is greater than 3 mm, or a creepage distance between two adjacent second connection portions is greater than 3 mm;

And/or in the second interface, a clearance distance between two adjacent second connection portions is greater than 3 mm, or a creepage distance between two adjacent second connection portions is greater than 3 mm;

And/or a creepage distance between the first interface and the second interface is greater than 3 mm.

According to the technical solutions in the embodiments, the clearance distance or creepage distance between two interconnected second connection portions located in the first interface or the second interface meets an electrical safety requirement, and the clearance distance or creepage distance between the first interface and the second interface meets the electrical safety requirement.

In some embodiments, the housing main body is further provided with a first identification portion and a second identification portion, the first identification portion is disposed at a side portion of the first interface, the second identification portion is disposed at a side portion of the second interface, and the first identification portion and the second identification portion have different identifiers.

According to the technical solutions in the embodiments, the corresponding first identification portion and second identification portion are disposed near the first interface and the second interface, respectively, and the two identification portions are provided with different identification information, such that a user can distinguish the first interface and the second interface by means of the corresponding identification information.

In some embodiments, a spacing distance between the two adjacent main body portions is 5 mm to 25 mm.

According to the technical solutions in the embodiments, the spacing distance between the two adjacent main body portions is set to be within the above-mentioned range. On the one hand, the internal space of the housing main body can be reasonably utilized to arrange the main body portions of the electrical connection members, such that the main body portions can have reasonable arrangement positions. On the other hand, the spacing distance between two adjacent main body portions can also meet the electrical safety requirement, reducing the risk of electrical failure due to an excessively high voltage.

In some embodiments, the width dimension of the electrical connection member along a direction perpendicular to an extension direction of the electrical connection member is 0.5 mm to 10 mm.

According to the technical solutions in the embodiments, the width dimension of the electrical connection member is set to be within the above-mentioned range, such that on the one hand, the electrical connection member can have a specific structural strength, and on the other hand, the width of each electrical connection member can also meet the electrical safety requirement.

In some embodiments, the thickness dimension of the electrical connection member along the recess direction of the recessed hole is 0.5 mm to 2.5 mm.

According to the technical solutions in the embodiments, the thickness dimension of the electrical connection member is set to be within the above-mentioned range, such that on the one hand, the electrical connection member can have the specific structural strength, and on the other hand, the thickness of each electrical connection member can also meet the electrical safety requirement.

According to a second aspect, provided in the present application is a forming method for a housing structure of a high-voltage power distribution device, comprising:
Manufacturing a plurality of electrical connection members, wherein each of the electrical connection members comprises a main body portion, and the main body portions of two adjacent electrical connection members are disposed at an interval and connected by means of a connection rib;
Integrally injection molding the main body portions of the electrical connection members and embedding the main body portions into the same housing main body, and reserving a recessed hole at a position of the housing main body directly facing the connection rib; and
Disconnecting the corresponding connection rib at the position of the recessed hole, to obtain the housing structure.

According to the technical solutions in the embodiments, before injection molding and during injection molding, two adjacent electrical connection members are positioned and connected by means of disposing the connection rib, and the connection rib can play a role in positioning and supporting the adjacent electrical connection members, such that the plurality of electrical connection members can be integrally injection molded as integral members with the housing main body. During injection molding, no relative positional movement occurs between the electrical connection members, thereby simplifying the operation of positioning the electrical connection members during injection molding, such that the disposed position of the electrical connection member can be more accurately placed in the preset position of the mold. In addition, during injection molding, a risk that the electrical connection member moves with the flow of the injection molding material can also be reduced, and the position of the electrical connection member after formation is more accurate. In addition, after injection molding, formation and cooling, the connection rib is disconnected from the recessed hole, to disconnect the connection rib between the two adjacent main body portions, i.e., the two adjacent electrical connection members, such that the two electrical connection members are insulated from each other, and the electrical connection members have a normal connection function and can establish connections to other electrical connection structures inside and outside the high-voltage power distribution device, thereby providing a guarantee for improving the assembly efficiency of the high-voltage power distribution device.

According to a third aspect, provided in the present application is another forming method for a housing structure of a high-voltage power distribution device, comprising:
Manufacturing a plurality of electrical connection members, wherein each of the electrical connection members comprises a main body portion, and the main body portions of two adjacent electrical connection members are disposed at an interval and connected by means of a connection rib;
Integrally injection molding the main body portions of the electrical connection members and embedding the main body portions into the same housing main body, and reserving a recessed hole at a position of the housing main body directly facing the connection rib;
Disconnecting the corresponding connection rib at the position of the recessed hole, to obtain a first housing;
Manufacturing a second housing provided with several insulating protrusions protruding from a surface thereof, wherein dimensions of the insulating protrusions are adapted to dimensions of at least some of the recessed holes; and
Connecting the first housing and the second housing, and inserting the insulating protrusions into the recessed holes adapted to the insulating protrusions at a position between two adjacent main body portions, to obtain the housing structure.

According to the technical solutions in the embodiments, the housing structure manufactured by using present the method comprises the first housing and the second housing. The first housing is obtained after the corresponding connection rib is disconnected at the position of the recessed hole, and then the second housing is manufactured. The surface of the second housing is convexly provided with insulating protrusions, and the insulating protrusions are adapted to some of the recessed holes on the first housing, such that after the first housing is connected to the second housing, the insulating protrusions can be inserted into the corresponding recessed holes, and separate the main body portions of the two adjacent electrical connection members that correspond to the recessed holes, and the two adjacent main body portions can be insulated by means of the insulating protrusions inserted therebetween.

In some embodiments, in the step of manufacturing a plurality of electrical connection members, a pre-cut portion is disposed on each of the connection ribs, and the pre-cut portion comprises at least one of a reduced-thickness portion and a reduced-width portion.

In some embodiments, in the step of disposing a pre-cut portion on each of the connection ribs, a pre-cut recess is disposed on at least one side edge of an end portion of the connection rib connected to the corresponding main body portion to form the pre-cut portion.

According to the technical solutions in the embodiments, after the main body portions and the connection ribs are formed, the connection ribs are processed, and the pre-cut portion is disposed on each of the connection ribs. The thickness dimension of the pre-cut portion is smaller than the thickness dimension of another position of the connection rib, or the width dimension of the pre-cut portion is smaller than the width dimension of another position of the connection rib, thereby making preparations for subsequently disconnecting the connection rib conveniently and quickly.

In some embodiments, along a direction perpendicular to a spacing direction between the two adjacent main body portions, the width dimension of the connection rib is 1 mm to 3 mm, and/or the thickness of at least a part of a position of the connection rib is less than the thickness of the main body portion, and/or the thickness dimension of the connection rib is 0.2 mm to 1.0 mm.

In some embodiments, the length dimension of the connection rib along the spacing direction between the two adjacent main body portions is 5 mm to 25 mm.

According to a fourth aspect, provided in the present application is a battery device, comprising a battery cell assembly and the above-mentioned high-voltage power distribution device, wherein the high-voltage power distribution device is used to electrically connect to the battery cell assembly.

According to a fifth aspect, provided in the present application is an electric apparatus, comprising the above-mentioned battery device, wherein the battery device is used to supply electric energy to the electric apparatus.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

To describe the technical solutions in the embodiments of the present application more clearly, a brief description of the accompanying drawings needed for describing the embodiments or the exemplary technology is provided. It is clear that the accompanying drawings described below are merely some embodiments of the present application. Those of ordinary skill in the art can still derive other accompanying drawings from these accompanying drawings without creative efforts.
FIG. 1 is a schematic structural diagram of a vehicle according to some embodiments of the present application;
FIG. 2 is an exploded schematic diagram of a battery device according to some embodiments of the present application;
FIG. 3 is a schematic structural diagram of a high-voltage power distribution device according to some embodiments of the present application;
FIG. 4 is an exploded schematic diagram of the high-voltage power distribution device shown in FIG. 3;
FIG. 5 is a schematic structural diagram of a first housing of the high-voltage power distribution device shown in FIG. 3;
FIG. 6 is an exploded schematic diagram of the first housing of the high-voltage power distribution device shown in FIG. 5;
FIG. 7 is an enlarged schematic diagram at A in FIG. 5;
FIG. 8 is an enlarged schematic diagram at B in FIG. 5;
FIG. 9 is a schematic structural diagram of an electrical connection member in the first housing shown in FIG. 5;
FIG. 10 is a partially enlarged view of the high-voltage power distribution device shown in FIG. 3;
FIG. 11 is a schematic structural diagram of a second housing of the high-voltage power distribution device shown in FIG. 3;
FIG. 12 is a partially enlarged view of a cross-sectional view of the high-voltage power distribution device shown in FIG. 3;
FIG. 13 is a partially enlarged view at an interface position of the high-voltage power distribution device shown in FIG. 3;
FIG. 14 is a schematic flowchart of a forming method for a housing structure of a high-voltage power distribution device according to an embodiment of the present application;
FIG. 15 is a schematic flowchart of a forming method for a housing structure of a high-voltage power distribution device according to another embodiment of the present application;
FIG. 16 is a schematic structural diagram of an electrical connection member obtained in step S10 by using a forming method for a housing structure of a high-voltage power distribution device according to an embodiment of the present application;
FIG. 17 is a schematic structural diagram of a first housing before a connection rib is disconnected in a forming method for a housing structure of a high-voltage power distribution device according to an embodiment of the present application; and
FIG. 18 is an enlarged schematic diagram of a partial structure of a first housing before a connection rib is disconnected.

In which, reference signs in the figures:
100-vehicle; 1001-controller; 1002-motor;
200-battery device;
10-high-voltage power distribution device;
101-first housing; 11-housing main body; 111-recessed hole; 1111-first hole; 1112-recess; 112-first surface; 113-second surface; 12-electrical connection member; 121-main body portion; 122-first connection portion; 123-second connection portion; 124-first connection member; 125-second connection member; 126-connection rib; 1261-pre-cut portion; 1262-pre-cut recess; 1211-spacing area; 13-interface; 131-accommodating cavity; 132-first interface; 133-second interface; 14-first identification portion; 15-second identification portion; 16-insulating spacer;
102-second housing; 1021-insulating protrusion;
103-electrical member.

### DESCRIPTION OF EMBODIMENTS

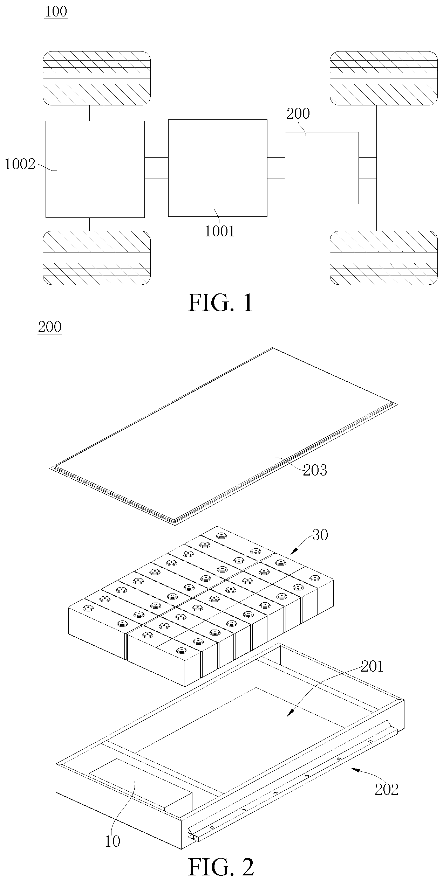

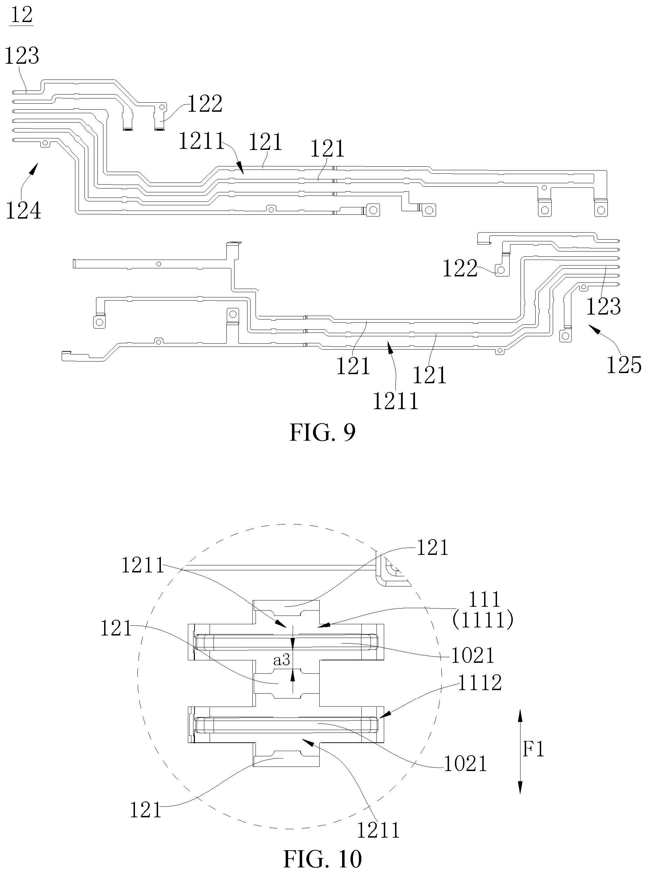

In order to make clearer the technical problems to be resolved, the technical solutions, and the beneficial effects of the present application, the present application is further described in detail below with reference to FIG. 1 to FIG. 18 and embodiments. It should be understood that the specific embodiments described herein are only used to explain the present application and are not used to limit the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. Thus, a feature defined by "first" and "second" may explicitly or implicitly indicates that the feature is singular or plural.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by those skilled in the art that the embodiments described herein may be combined with other embodiments in any suitable manner.

Unless otherwise specified, all embodiments and optional embodiments of the present application may be combined with each other to form new technical solutions.

Unless otherwise specified, all technical features and optional technical features of the present application can be combined with each other to form new technical solutions.

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the method may further include step (c), which indicates that step (c) may be added to the method in any order. For example, the method may include steps (a), (b), and (c), may include steps (a), (c), and (b), may include steps (c), (a) and (b), or the like.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces). "Several" means one or more unless specifically defined otherwise.

In the description of the embodiments of the present application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like are based on orientations or positional relationships shown in the drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

In the description of the embodiments of the present application, unless explicitly specified and defined otherwise, the terms "mount", "couple", "connect", and "fasten" should be broadly understood, for example, they may be a fixed connection, a detachable connection, or an integral connection; or may be a mechanical connection, or an electrical connection; or may be a direct connection, or an indirect connection via an intermediate medium, or an internal communication between two elements or interaction between two elements. A person of ordinary skill in the art may understand the specific meanings of the above terms in the embodiments of the present application according to specific situations.

In the description of the embodiments of the present application, unless explicitly specified and defined otherwise, when an element is referred to as being "fixed on" or "disposed on" another element, the element may be directly or indirectly on the another element. When an element is referred to as being "connected to" another element, it can be directly or indirectly connected to another element.

In the description of the embodiments of the present application, unless explicitly specified and defined otherwise, the technical term "adjacent" refers to being close in position. For example, for three components A1, A2, and B, a distance between A1 and B is greater than a distance between A2 and B. In this case, A2 is closer to B than A1, that is, A2 is adjacent to B, or B is adjacent to A2. For another example, when there are a plurality of components C, and the plurality of components C are C1, C2, ..., and CN respectively, and when one of the components C, such as C2, is closer to the component B than the other components C, then B is adjacent to C2, or C2 is adjacent to B.

At present, in view of the development of the market, the use of power batteries is becoming increasingly more widespread. Power batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of power batteries continues to expand, a market demand for power batteries continues to increase.

With the continuous expansion of the market demand for batteries, high requirements have also been introduced for the manufacturing efficiency of battery devices. Generally, a battery device may include one or a plurality of battery cell assemblies for providing a voltage and a capacity, and the battery device further includes a high-voltage power distribution device. The high-voltage power distribution device is mainly used to control the stable operation of a charging/discharging circuit of the battery device, and is responsible for controlling a power-on/off process, a pre-charging process, and a charging process of a high-voltage electrical loop. "Voltage" in the high-voltage power distribution device indicates an electrical voltage, and the high-voltage power distribution device is a power distribution device for controlling a circuit having a voltage greater than 60 V. For example, a high-voltage power distribution device may be a high-voltage power distribution box, and the high-voltage power distribution box may be configured to be responsible for electric energy distribution and management of a high-voltage system in an electric apparatus, for example, a high-voltage power distribution unit (PDU) applied to a new energy vehicle. The PDU is responsible for power distribution and management in the high-voltage system of the new energy vehicle, and provides the entire vehicle with functions such as charging and discharging control, high-voltage component power-on control, circuit overload short-circuit protection, high-voltage sampling, and low-voltage control, to protect and monitor the operation of the high-voltage system. The high-voltage power distribution box may alternatively be a component that is applied to a battery and that is used to control charging and discharging of the battery, for example, a battery disconnect unit (BDU). The BDU is a system for controlling charging and discharging of the battery, and is a high-voltage power distribution box specially designed for the battery.

The high-voltage power distribution device includes various electrical members, electrical connection members for circuit connection and collection of various signals, connectors for transmitting electrical signals, and the like. The various electrical connection members for circuit connection and collection of various signals need to be accurately connected to terminals, pins, or interfaces of corresponding electrical elements to ensure the normal operation of the high-voltage power distribution device. The electrical connection members usually include a copper busbar, an aluminum busbar, a conductive wire harness, or the like. Many electrical connection members are arranged dispersed in the housing of the high-voltage power distribution device. There are many electrical elements inside the housing, and when the electrical connection members are arranged, insulation between the electrical connection members and adjacent electrical elements and electrical connection members needs to be further considered on the basis of ensuring stable electrical connection. A means of arrangement of the electrical connection members inside the housing is complex, and it is difficult to implement automatic connection and assembly. As a result, the difficulty of overall assembly of the high-voltage power distribution device is high, and assembly efficiency is difficult to improve.

In the related art, in order to improve the assembly efficiency, a housing structure in which an electrical connection member is partially embedded into a housing has emerged the electrical connection member being integrally formed with the housing by using an insert injection molding process. After formation, the electrical connection member and the housing are used as an integral member to be connected to other structures of the high-voltage power distribution device, so as to improve assembly efficiency. However, although such a housing structure can effectively improve assembly efficiency, the difficulty in positioning of the electrical connection member during injection molding is high, and the position of the electrical connection member easily changes with the flow of the molten housing forming material. Consequently, the electrical connection member shifts in position, the positional accuracy of the electrical connection member is reduced, and even adjacent electrical connection members may be electrically connected due to movement, resulting in a high risk of a short circuit inside the high-voltage power distribution device, and affecting the stable operation of the high-voltage power distribution device.

On this basis, provided in an embodiment of the present application is a high-voltage power distribution device, main body portions of electrical connection members being embedded into a housing main body, and the main body portions being tightly combined with the housing main body, such that the electrical connection members can be firmly and stably fastened to the housing main body, and the electrical connection members and the housing main body, i.e., a first housing, are used as an integral member to be disassembled from or assembled with another structure, thereby simplifying an assembly process and improving assembly efficiency. On this basis, the housing main body is further provided with several recessed hole structures. Some or all of recessed holes are located between main body portions of two adjacent electrical connection members. In addition, each spacing area is disposed corresponding to at least one recessed hole. In this way, a part of a cavity area is formed by means of the recessed hole at a position between two adjacent main body portions. Before the first housing is injection molded and formed, a connection rib may be disposed at a position of the spacing area corresponding to the recessed hole, to connect the two adjacent main body portions. After injection molding is completed, the connection rib is disconnected at the position of the recessed hole, such that the two adjacent main body portions are electrically separated. In this way, before injection molding and during injection molding, the two adjacent electrical connection members may be positioned and connected by means of providing the connection rib, and the connection rib can play a role in positioning and supporting the adjacent electrical connection members, such that the plurality of electrical connection members can be integrally injection molded as an integral member with the housing main body. During injection molding, no relative positional movement occurs between the electrical connection members, the disposed positions of the electrical connection members are more accurate, and a risk of an internal short circuit is reduced. After injection molding, the connection rib is disconnected from the recessed hole, to disconnect the connection rib between the two adjacent main body portions, i.e., the two adjacent electrical connection members, such that the two electrical connection members are insulated from each other, and the electrical connection members have a normal connection function and can establish connections to other electrical connection structures inside and outside the high-voltage power distribution device, thereby improving the assembly efficiency of the high-voltage power distribution device and providing a guarantee of stable operation of the high-voltage power distribution device.

The high-voltage power distribution device provided in the present application may be applied to a battery device, and the assembly efficiency and electrical reliability of the high-voltage power distribution device are improved, thereby helping improve the overall assembly efficiency and electrical performance of the battery device, and improve the practicability and economy of the battery device.

The battery device disclosed in the embodiments of the present application may be, but is not limited to being, used in an electric apparatus such as a vehicle, a ship, or an aircraft. A power system of the electric apparatus having the battery and the like disclosed in the present application may be used. This can effectively improve the overall assembly efficiency of the battery and meet a manufacturing efficiency requirement.

Provided in an embodiment of the present application is an electric apparatus using a battery device as a power supply, the battery device being configured to supply electric energy to the electric apparatus. The electric apparatus may be, but is not limited to being, a mobile phone, a portable device, a notebook computer, a battery powered vehicle, an electric vehicle, a ship, a space vehicle, an electric toy, and an electric tool. For example, the space vehicle includes an airplane, a rocket, a space shuttle, and a spacecraft; the electric toy includes a fixed or movable electric toy, such as a game console, an electric vehicle toy, an electric ship toy, and an electric airplane toy; and the electric tool includes an electric tool for metal cutting, an electric tool for grinding, an electric tool for assembly, and an electric tool for railway, such as an electric drill, an electric grinder, an electric wrench, an electric screwdriver, an electric hammer, an electric impact drill, a concrete vibrator, and an electric planer.

To facilitate the description, in the following embodiments, as an example for description, provided in an embodiment of the present application is an electric device, and the electric device is a vehicle.

Referring to FIG. 1, FIG. 1 is a schematic structural diagram of a vehicle 100 according to some embodiments of the present application. The vehicle 100 may be a fuel vehicle, a gas vehicle, or a new energy vehicle, and the new energy vehicle may be a battery electric vehicle, a hybrid vehicle, or a range-extended electric vehicle. The vehicle 100 is internally provided with a battery device 200, and the battery device 200 may be disposed at the bottom, head, or tail of the vehicle 100. The battery device 200 may be used to power the vehicle 100; for example, the battery device 200 may be used as an operating power supply of the vehicle 100. The vehicle 100 may further include a controller 1001 and a motor 1002, the controller 1001 being used to control the battery device 200 to power the motor 1002, e.g., for a working power requirement of the vehicle 100 during starting, navigating, and driving.

In some embodiments, the battery device 200 may be used not only as the operating power supply of the vehicle 100, but also as a driving power supply of the vehicle 100, instead of, or partially instead of, fuel or natural gas, to provide driving power for the vehicle 100.

Referring to FIG. 2, provided in an embodiment of the present application is a battery device 200. The battery device 200 may include one or a plurality of battery cell assemblies 30 for providing a voltage and a capacity. The battery cell assembly 30 may comprise a plurality of battery cells, the plurality of battery cells being connected in series, in parallel, or in series-parallel by means of a busbar component.

In some embodiments, the battery device 200 comprises a battery management system (BMS), the battery management system being a core component responsible for monitoring and managing a state of a battery cell. Main functions of the battery management system include: monitoring parameters such as a voltage, a current, and a temperature of the battery cell in real time, to ensure that the battery is in a safe working state; balancing power levels of battery cells in the battery cell assembly 30 in an active or passive manner, to prolong a service life of the battery; controlling and adjusting a temperature of the battery cell, to avoid performance degradation or a safety risk caused by overheating or overcooling; and detecting a fault of the battery cell assembly 30 and the BMS, and taking corresponding protection measures, such as power cut-off and alarm.

As an example, the battery management system may be disposed in a case body 20 to support and protect the battery management system by means of the case body 20.

As an example, the battery management system may alternatively be disposed outside the case body 20, and be connected to components such as a battery cell and a sensor in the case body 20 by means of wires.

In some embodiments, the battery cell assembly 30 is usually formed by arranging a plurality of battery cells. A battery cell may be a secondary battery, a secondary battery referring to a battery cell that may be continuously used by activating an active material by means of charging the battery cell after the battery cell is discharged. The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, without limitation for the battery cell in the embodiments of the present application.

As an example, the battery cell assembly 30 may be a battery module, a battery module being an independent module formed by arranging and fixing a plurality of battery cells. As an example, the battery module may be formed by bundling a plurality of battery cells by means of a cable tie.

In some embodiments, the battery device 200 may be a battery pack, the battery pack comprising a case body 20 and one or a plurality of battery cell assemblies 30, and the battery cell assemblies 30 being accommodated in the case body 20.

As an example, the battery cell assembly 30 may be a battery module, and the battery cell assembly 30 may be accommodated in the case body 20 by means of fixing the battery module in the case body 20.

As an example, the battery cell assembly 30 may alternatively be accommodated in the case body 20 by means of directly fixing a plurality of battery cells in the case body 20.

In some embodiments, the case body 20 has accommodating space 201 inside to accommodate the battery cell assembly 30. The case body 20 may be made of a material having specific hardness and strength, such that the case body 20 is not likely to deform when subjected to compression and impact, enabling the battery to have higher structural strength and improved reliability. The case body 20 may be made of various materials, including but not limited to aluminum, stainless steel, an aluminum alloy, iron, plastic, and the like.

In some embodiments, the case body 20 may be a part of a chassis structure of the vehicle 100. For example, a part of the case body 20 may be at least a part of a floor of the vehicle 100, or a part of the case body 20 may be at least a part of a cross beam and a longitudinal beam of the vehicle 100.

As an example, the case body 20 may include a first cover body 202 and a second cover body 203, the first cover body 202 and the second cover body 203 covering each other, and the first cover body 202 and the second cover body 203 jointly defining the accommodating space 201 for accommodating the battery cell. The second cover body 203 may be a hollow structure having an opening at one end, and the first cover body 202 may be a plate-shaped structure, the first cover body 202 covering an opening side of the second cover body 203 such that the first cover body 202 and the second cover body 203 jointly define the accommodating space 201. Alternatively, the first cover body 202 and the second cover body 203 each may be a hollow structure having an opening at one end, and an opening side of the first cover body 202 covers an opening side of the second cover body 203. Certainly, the case body 20 formed by the first cover body 202 and the second cover body 203 may be in various shapes, such as a cylinder and a rectangular cuboid.

In some embodiments, as shown in FIG. 2, the battery device 200 may further include a high-voltage power distribution device 10, and the high-voltage power distribution device 10 may be accommodated in the accommodating space 201 of the case body 20, or may be located outside the accommodating space 201 of the case body 20. The high-voltage power distribution device 10 is electrically connected to the battery cell assembly 30, and the high-voltage power distribution device 10 is used to control charging and discharging, and the like of the battery device 200.

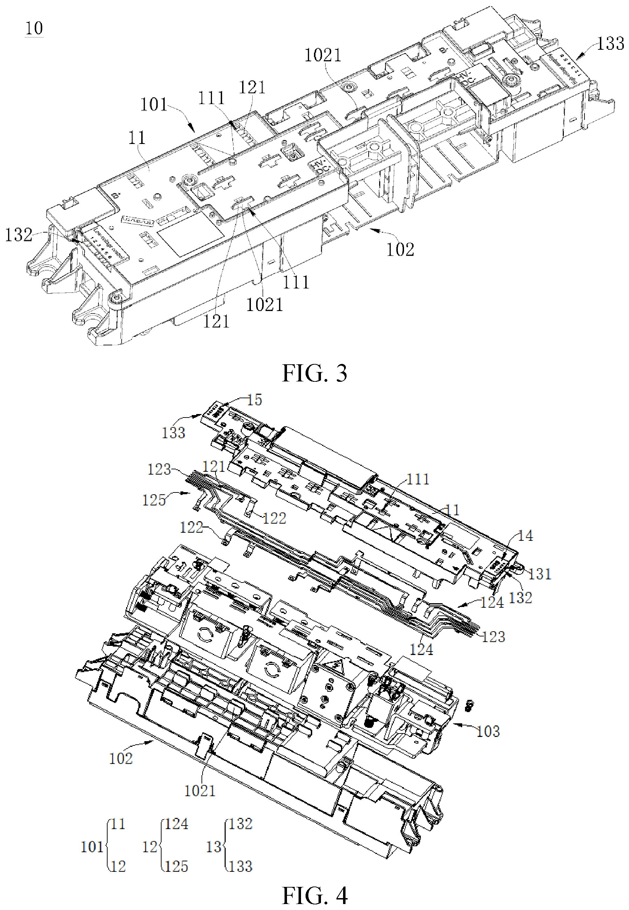

The following describes the power distribution element device in the present application in detail with reference to FIG. 3 to FIG. 18 and specific embodiments. In the embodiments of the present application, the first direction is a direction indicated by the double-headed arrow F1 in the figures.

Referring to FIG. 3 to FIG. 5, provided in an embodiment of the present application is a high-voltage power distribution device 10, comprising a first housing 101. The first housing 101 comprises a housing main body 11 and a plurality of electrical connection members 12. The housing main body 11 is an insulated member, each electrical connection member 12 includes a main body portion 121 and a first connection portion 122 led out from the main body portion 121, each main body portion 121 is embedded into the housing main body 11, and the first connection portions 122 are spaced apart from each other and exposed to a surface of the housing main body 11. The plurality of electrical connection members 12 are arranged at intervals from each other and form a spacing area 1211 between two adjacent main body portions 121, the surface of the housing main body 11 is recessed inwardly to form several recessed holes 111, at least some of the recessed holes 111 are located in the spacing area 1211, and each spacing area 1211 corresponds to at least one of the recessed holes 111.

It can be understood that, in the embodiments of the present application, the high-voltage power distribution device 10 refers to a set of various components or assemblies used to receive, distribute, and control electric energy in a power distribution system, and can implement electric energy distribution. The high-voltage power distribution device can not only properly distribute high-voltage electric energy from a power supply end to a plurality of different power consumption branches or loads, but can also be configured to control a circuit, e.g., control connection or disconnection of the circuit, so as to implement distribution and management of electric energy. In addition, the high-voltage power distribution device can be further used to provide a protection function in the circuit, e.g., can automatically cut off the circuit when a fault such as overloading, a short circuit, or electric leakage occurs on the circuit, and can be further used to perform energy measurement and detection in the circuit, e.g., measure and monitor parameters such as a current, a voltage, and power in the circuit, to learn an operating status of the circuit. For example, the high-voltage power distribution device 10 may be used in a battery device for distributing and managing electric energy of battery cell assemblies in the battery device, and so on. The high-voltage power distribution device 10 may be internally provided with electrical elements such as a relay, a circuit breaker, a contactor, a fuse, a circuit breaker, a current transformer and a voltage transformer, to implement related control of the circuit.

In the embodiments of the present application, the high-voltage power distribution device 10 comprises a first housing 101. The first housing 101 may be a housing of the entire high-voltage power distribution device 10, or may be a part of the housing structure, and plays a role in protecting internal structural members. Alternatively, the first housing 101 may be an inner housing structure of the internal space of the high-voltage power distribution device 10, so as to play a role in supporting internal electrical members 103 and other structural members. The first housing 101 includes a housing main body 11 and a plurality of electrical connection members 12. In other words, the first housing 101 is formed by at least two parts: the housing main body 11 and the electrical connection members 12. The housing main body 11 is a main body portion of the first housing 101, and is an insulated member made of an insulating material. An electrical connection member 12 includes a main body portion 121, the main body portion 121 of each electrical connection member 12 being embedded into the housing main body 11. In other words, the main body portion 121 does not protrude from an outer surface of the housing main body 11, and positions of most of the main body portions are wrapped by the housing main body 11. The main body portion 121 of each electrical connection member 12 is positioned and embedded into the housing main body 11, and the main body portions 121 are disposed at intervals and isolated from each other, such that insulation can be implemented therebetween. In addition, the housing main body 11 can also play a good protective role for the internal main body portion 121, thereby reducing adverse impact of external environmental factors such as mechanical impact and chemical corrosion on the electrical connection members 12. The housing main body 11 may be made of an inorganic insulating material, an organic insulating material, or a composite insulating material. For example, the material of the housing main body 11 may be ceramic, glass, mica, plastic, rubber, an epoxy glass fiber cloth composite material, or the like.

On this basis, each electrical connection member 12 further comprises a first connection portion 122, the first connection portion 122 is led out from the main body portion 121 and exposed to the outside of the surface of the housing main body 11, and the first connection portion 122 is used to electrically connect to other electrical members 103 outside the first housing 101. The first connection portion 122 may be electrically connected to another electrical member 103 by connection means such as welding, crimping, insertion, or locking. In this way, each electrical connection member 12 is firmly positioned and connected to the housing main body 11 by means of the respective main body portion 121, such that the electrical connection member 12 and the housing main body 11 can be used as an integral member to be disassembled from or assembled with other structures. Then, each electrical connection member 12 is electrically connected to the electrical member 103 outside the first housing 101 by means of the exposed first connection portion 122, such that each electrical connection member 12 can normally play a role of electrical connection thereof.

In the embodiments of the present application, the plurality of electrical connection members 12 are arranged at intervals from each other and form a spacing area 1211 between two adjacent main body portions 121. The plurality of electrical connection members 12 being arranged at intervals from each other means that the main body portions 121 of the electrical connection members 12 are spaced apart from each other, and the first connection portions 122 of the electrical connections are spaced apart from each other, i.e., the electrical connection members 12 are not in contact with each other. In addition, there is a spacing area 1211 between the main body portions 121 of the two adjacent electrical connection members 12, and the spacing area 1211 may be partially or completely filled with the material of the housing main body 11, such that the two adjacent main body portions 121 can be electrically separated by using a partial structure and a space interval of the insulated housing main body 11 in the spacing area 1211. The first connection portions 122 of the electrical connection members 12 are disposed at intervals from each other and are not conducted with each other, such that the electrical connection members 12 are insulated from each other.

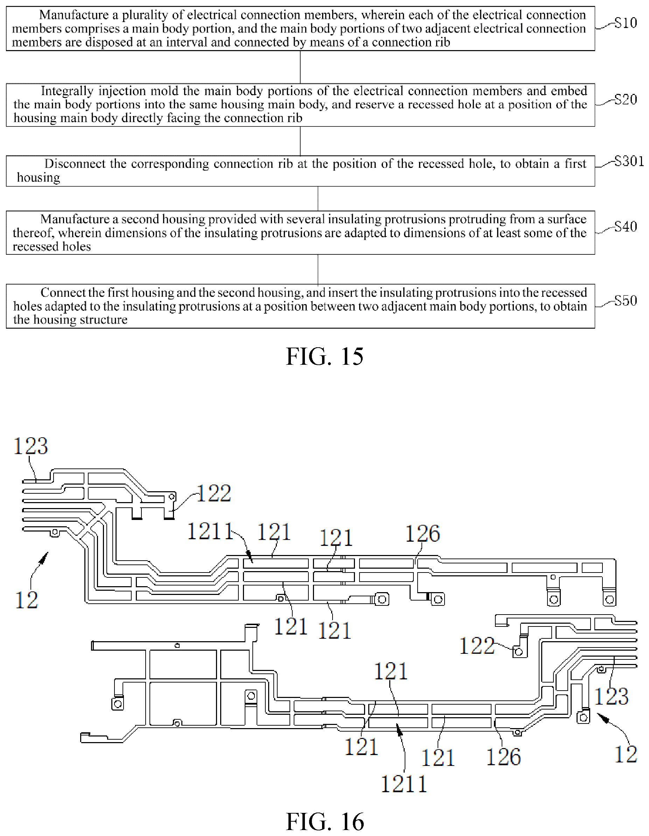

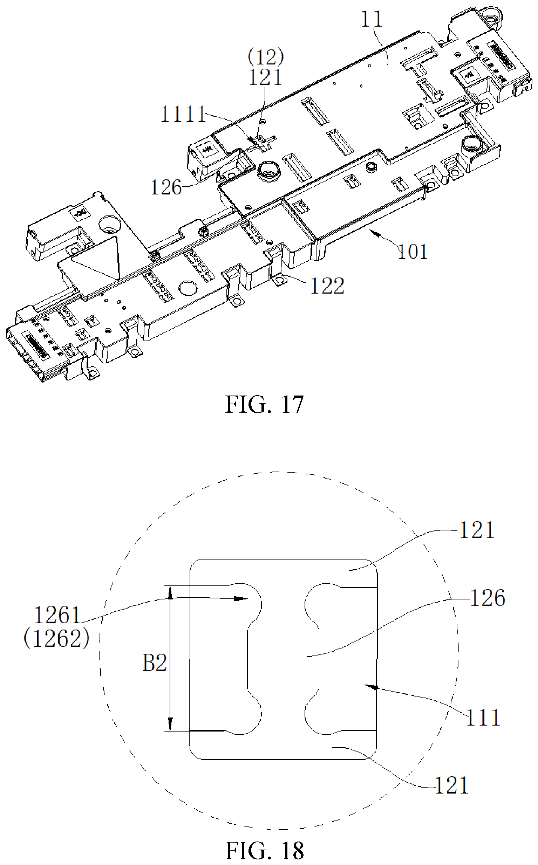

Referring to FIG. 16 and FIG. 17 together, in the embodiments of the present application, the surface of the housing main body 11 is further recessed inwardly to form several recessed holes 111. A recessed hole 111 may be a structure of a recess 1112 that is formed by recessing one side surface of the housing main body 11 downward but does not penetrate through the entire housing main body 11. Alternatively, the recessed hole 111 may be a through-hole structure that is recessed downward from one side surface of the housing main body 11 and penetrates through the other opposite surface, that is, the recessed hole 111 penetrates through the entire housing main body 11. At least a part of the recessed hole 111 is located in the spacing area 1211, i.e., a part of the recessed hole 111 or the entire recessed hole 111 is disposed in the spacing area 1211 between two adjacent main body portions 121, such that the spacing area 1211 between the two adjacent main body portions 121 may form at least a part of a cavity area by means of the recessed hole 111, i.e., there is an area that is not filled by the housing main body 11 between the two adjacent main body portions 121. In addition, each spacing area 1211 corresponds to at least one recessed hole 111, i.e., there are one or a plurality of areas that are not filled by the housing main body 11 and that are formed by means of the recessed hole 111 at a position between the two adjacent main body portions 121. In this way, before the plurality of electrical connection members 12 and the housing main body 11 are integrally injection molded, a connection rib 126 may be disposed to connect the two adjacent main body portions 121, and a disposed position of the connection rib 126 corresponds to a part of a position of at least one recessed hole 111 on the housing main body 11. After the first housing 101 is formed, a part or all of the connection rib 126 between the two adjacent main body portions 121 corresponds to one recessed hole 111, such that after the first housing 101 is cooled and formed, the connection rib 126 is disconnected at the position of the recessed hole 111 to electrically separate the two adjacent main body portions 121.

Each spacing area 1211 corresponding to at least one recessed hole 111 means that there is one cavity area formed by means of the recessed hole 111 in the spacing area 1211 between the two adjacent main body portions 121, such that the two main body portions 121 can be provided with a connection rib 126 at a position corresponding to the cavity area, and the corresponding connection rib 126 is disconnected at the recessed hole 111 after the first housing 101 is formed, thereby electrically separating the corresponding two main body portions 121. Alternatively, a plurality of cavity areas formed by means of a plurality of recessed holes 111 may be provided in the spacing area 1211 between the two interconnected main body portions 121, and the plurality of cavity areas are spaced apart from each other, such that the two main body portions 121 can be provided with a connection rib 126 at a position corresponding to each cavity area. To be specific, a plurality of connection ribs 126 are disposed at intervals along a length extension direction of the main body portion 121 to connect the two adjacent main body portions 121, and the corresponding connection rib 126 at each recessed hole 111 is disconnected after the first housing 101 is formed, thereby electrically separating the corresponding two main body portions 121.

It can be understood that, during specific manufacturing, the recessed hole 111 may be formed in the housing main body 11 by using a drilling method, a milling method, a punching method, a die molding method, or the like, and the connection rib 126 may be disconnected after the recessed hole 111 is formed, or the corresponding connection rib 126 may be disconnected while the recessed hole 111 is formed.

Referring to FIG. 16 and FIG. 17 together, in some examples, the first housing 101 may be manufactured by using the following method: The electrical connection member 12 is manufactured by using a material having good conductivity, such as copper or aluminum, according to design requirements, and the electrical connection member 12 having the main body portion 121, the connection rib 126, and the first connection portion 122 is manufactured by using a process such as stamping, forging, and cutting. A connection rib 126 is disposed at one or a plurality of spaced positions between two adjacent main body portions 121 for connection. A mold for the housing main body 11 is manufactured by using a suitable insulating material according to design requirements. During mold design, embedding positions of main body portions 121 of a plurality of electrical connection members 12 are accurately reserved, dimensions and shapes of the embedding positions accurately matching dimensions and shapes of the main body portions 121 of the electrical connection members 12, such that each main body portion 121 can be tightly connected to the housing main body 11 after being embedded. In addition, one or a plurality of hole positions are also reserved. A position of a through hole corresponds to the position of the connection rib 126 between main body portions 121 of the electrical connection members 12. The main body portions 121 of the electrical connection member 12 are accurately placed at the corresponding positions of the mold for forming the housing main body 11, and then the molten insulating material is injected into the mold. The integral injection molding process is used to firmly combine the housing main body 11 and the main body portion 121 of the electrical connection member 12, and the recessed hole 111 is formed at the position corresponding to each connection rib 126. The corresponding connection rib 126 at the position of each recessed hole 111 is disconnected, such that the two interconnected main body portions 121 are electrically separated.

In some other examples, the first housing 101 may alternatively be manufactured by using the following method: The electrical connection member 12 is manufactured by using a material having good conductivity, such as copper or aluminum, according to design requirements, and the electrical connection member 12 having the main body portion 121, the connection rib 126, and the first connection portion 122 is manufactured by using a process such as stamping, forging, and cutting. A connection rib 126 is disposed at one or a plurality of positions between two adjacent main body portions 121 for connection. A mold for the housing main body 11 is manufactured by using a suitable insulating material according to design requirements. During mold design, embedding positions of main body portions 121 of a plurality of electrical connection members 12 are accurately reserved, dimensions and shapes of the embedding positions accurately matching dimensions and shapes of the main body portions 121 of the electrical connection members 12, such that each main body portion 121 can be tightly connected to the housing main body 11 after being embedded. The main body portion 121 of the electrical connection member 12 is accurately placed at the corresponding position of the mold for forming the housing main body 11, and then the molten insulating material is injected into the mold. The integral injection molding process is used to firmly combine the housing main body 11 and the main body portion 121 of the electrical connection member 12. The housing main body 11 is machined and processed, the recessed hole 111 recessed inwardly is manufactured according to design requirements by using a method such as drilling, milling, or punching, and the corresponding connection rib 126 is disconnected while the recessed hole 111 is formed, such that the two interconnected main body portions 121 are electrically separated.

According to the high-voltage power distribution device 10 in the embodiments of the present application, main body portions 121 of electrical connection members 12 are embedded into a housing main body 11, and the main body portions 121 are tightly combined with the housing main body 11, such that the electrical connection members 12 can be firmly and stably fastened to the housing main body 11, and the electrical connection members 12 and the housing main body 11, i.e., a first housing 101, are used as an integral member to be disassembled from or assembled with another structure, thereby simplifying an assembly process and improving assembly efficiency. On this basis, the housing main body 11 is further provided with several recessed hole 111 structures. Some or all of the recessed holes 111 are located between main body portions 121 of two adjacent electrical connection members 12. In addition, each spacing area 1211 is disposed corresponding to at least one recessed hole 111. In this way, there is a part of a cavity area formed by means of the recessed hole 111 at a position between two adjacent main body portions 121. Before the first housing 101 is injection molded and formed, a connection rib 126 may be disposed at a position of the spacing area 1211 corresponding to the recessed hole 111, to connect the two adjacent main body portions 121. After injection molding is completed, the connection rib 126 at the position of the recessed hole 111 is disconnected, such that the two adjacent main body portions 121 are electrically separated. In this way, before injection molding and during injection molding, the two adjacent electrical connection members 12 may be positioned and connected by means of disposing the connection rib 126, and the connection rib 126 can play a role in positioning and supporting the adjacent electrical connection members 12, such that the plurality of electrical connection members 12 can be integrally injection molded as an integral member with the housing main body 11. During injection molding, no relative positional movement occurs between the electrical connection members 12, the disposed positions of the electrical connection members 12 are more accurate, and a risk of an internal short circuit is reduced. After the injection molding, the connection rib 126 is disconnected from the recessed hole 111, to disconnect the connection rib 126 between the two adjacent main body portions 121, i.e., the two adjacent electrical connection members 12, such that the two electrical connection members 12 are insulated from each other, and the electrical connection members 12 have a normal connection function and can establish connections to other electrical connection structures inside and outside the high-voltage power distribution device 10, thereby improving the assembly efficiency of the high-voltage power distribution device 10 and providing a guarantee of stable operation of the high-voltage power distribution device 10.

In some embodiments, as shown in FIG. 3, FIG. 5, and FIG. 7, the two main body portions 121 are arranged at an interval along a first direction, and the two main body portions are located at two opposite sides of the corresponding recessed hole 111 along the first direction, respectively.

In the embodiments, the two main body portions 121 are arranged at an interval along the first direction, i.e., the main body portions 121 of the two electrical connection members 12 are disposed at an interval along the first direction, and a part of the housing main body 11 is embedded between the two main body portions 121. For a housing main body 11 having a small thickness, the first direction may be a width direction, a length direction, or another non-thickness direction of the housing main body 11. For a housing main body 11 having a certain thickness, the first direction may be any direction such as the width, the length, or the thickness of the housing main body 11. The two main body portions 121 are located at two opposite sides of the corresponding recessed hole 111 along the first direction, respectively, i.e., the spacing area 1211 between the two adjacent main body portions 121 corresponds to one recessed hole 111, and a middle area of the spacing area 1211 is disposed directly opposite to the middle of the recessed hole 111, such that in the first direction, that is, in the spacing direction of the two main body portions 121, one main body portion 121 is located at one side edge portion of the recessed hole 111, and the other adjacent main body portion 121 is located at the other opposite side edge portion of the recessed hole 111. In this way, the connection rib 126 can be disposed between the two main body portions 121 at the position corresponding to the recessed hole 111 for connection. After the first housing 101 is injection molded and cooled, the connection rib 126 is correspondingly disconnected from the two side edge positions of the recessed hole 111, thereby completely removing the part of the connection rib 126 directly facing the recessed hole 111.

It can be understood that the main body portion 121 is located at a side edge portion of the recessed hole 111, and the main body portion 121 may be partially exposed to the internal space of the recessed hole 111, or the main body portion 121 may be completely blocked by the housing main body 11. The connection rib 126 is retained only to extend from the hole edge of the recessed hole 111 into the internal space of the recessed hole 111.

In this way, two adjacent main bodies are disposed close to two opposite side edges of the recessed hole 111, such that most or all of connection ribs 126 disposed in advance between the two main body portions 121 can directly face the recessed hole 111. Therefore, all or most of the connection ribs 126 can be removed by means of the recessed hole 111, so as to maximize an insulation distance between the two adjacent main body portions 121.

In some embodiments, as shown in FIG. 3, FIG. 5, and FIG. 8, at least three of the main body portions 121 are sequentially arranged at intervals along the first direction, and the at least three sequentially arranged main body portions 121 correspond to the same recessed hole 111.

In the embodiments, the recessed hole 111 has a specific length dimension along the first direction, such that the same recessed hole 111 may correspond to three or more main body portions 121. In other words, among the three or more main body portions 121, parts of spacing areas 1211 between every two adjacent main body portions 121 are each directly opposite to and in communication with the same recessed hole 111. For example, the three main body portions 121 are sequentially arranged at intervals along the first direction, two spacing areas 1211 are formed between the three main body portions 121, and at least a part of each of the two spacing areas 1211 is directly opposite to the same recessed hole 111, such that a partial cavity structure is formed in each of the two spacing areas 1211 by means of the same recessed hole 111, and the connection rib 126 connected between the two adjacent main body portions 121 may be exposed and disconnected by means of the same recessed hole 111.

In this way, the connection ribs 126 between three or more main body portions 121 are disposed corresponding to the same recessed hole 111, such that two or more connection ribs 126 can be disconnected at the position of the same recessed hole 111, thereby helping simplify the forming step and improve the forming efficiency of the first housing 101.

In some embodiments, as shown in FIG. 3, FIG. 7, and FIG. 8, in the first direction, a dimension al of a portion of the main body portion 121 located on a side portion of the recessed hole 111 and protruding from a hole edge of the recessed hole 111 is less than or equal to 1 mm.

Thus, the first direction is a width direction of the main body portion 121, the main body portion 121 located at the side portion of the recessed hole 111 can be effectively blocked by the housing main body 11, and the main body portion 121 is exposed to internal space of the recessed hole 111 only by a width of approximately 1 mm, such that a sufficient spacing can be reserved between two adjacent main body portions 121 to meet an electrical insulation requirement.

In some embodiments, the housing main body 11 is provided with a plurality of recessed holes 111 at intervals, and among all spacing areas 1211, at least some of the spacing areas 1211 correspond to a plurality of the recessed holes 111 along an extension direction of the corresponding main body portion 121, respectively.

Herein, "all of the spacing areas 1211" comprises all the spacing areas 1211 located between the main body portions 121 of the electrical connection members 12, "among all spacing areas 1211, some of the spacing areas 1211" means one spacing area 1211 or two spacing areas 1211 or three or more spacing areas 1211 among all of the plurality of spacing areas 1211, "among all spacing areas 1211, at least some of the spacing areas 1211 correspond to a plurality of the recessed holes 111 along an extension direction of the corresponding main body portion 121, respectively" means that for one spacing area 1211 or two spacing areas 1211 or three spacing areas 1211 or all the spacing areas 1211, in one, two, three, or all of the spacing areas 1211, each spacing area 1211 separately corresponds to a plurality of recessed holes 111 disposed at intervals along the extension direction of the main body portion 121 corresponding to the spacing area. In other words, a plurality of cavity areas disposed at intervals are formed between two adjacent main body portions 121 by means of the plurality of recessed holes 111 disposed at intervals, such that one connection rib 126 can be disposed at each of the positions corresponding to the plurality of recessed holes 111 to connect the two main body portions 121.

In this way, for some main body portions 121 having a long length extension dimension, a plurality of connection ribs 126 can be disposed at intervals along the length extension direction of the main body portions to support the two main body portions 121, thereby helping further reduce a risk of movement of the electrical connection member 12 and improve positional accuracy after formation.

In some embodiments, a specific spacing distance is needed between the parts of the two adjacent main body portions 121 located on the inner side of the hole edge of the same recessed hole 111, so as to meet an insulation requirement.

It can be understood that the internal space of the recessed hole 111 is space exposed to the insulated main body portion 121, and the spatial environment in the recessed hole 111 is in communication with the external air environment. Therefore, the main body portion 121 located in the internal space of the recessed hole 111 is in contact with the air, such that a specific electrical spacing requirement needs to be met between the adjacent main body portions 121 that are exposed to the same recessed hole 111, so as to reduce the risk of electrical connection between two adjacent main body portions 121 at the recessed hole 111. The inner side of the hole edge refers to internal space surrounded and defined by the edge portion of the recessed hole 111, that is, the interior of the recessed hole 111.

In some embodiments, as shown in FIG. 3, FIG. 7, and FIG. 8, the spacing distance a2 between the parts of the two adjacent main body portions 121 located on the inner side of the hole edge of the same recessed hole 111 is greater than 3 mm.

In specific embodiments, when two adjacent electrical connection members 12 are connected to a low-voltage loop, and the parts of the two adjacent main body portions 121 located at the position of the recessed hole 111 are not separated by an insulating component, the spacing distance between the two adjacent main body portions 121 located in the same recessed hole 111 is greater than 3 mm, such that a clearance distance between the two adjacent main body portions 121 is greater than 3 mm, so as to meet an insulation requirement.

For example, the spacing distance between the two adjacent main body portions 121 may be 4 mm, 5 mm, 6 mm, 7 mm, 8 mm, 9 mm, or the like.

In some embodiments, the spacing distance between the parts of the two adjacent main body portions 121 located on the inner side of the hole edge of the same recessed hole 111 is greater than 9.5 mm.

In specific embodiments, when two adjacent electrical connection members 12 are connected to a high-voltage loop, and the parts of the two adjacent main body portions 121 located at the position of the recessed hole 111 are not separated by an insulating component, the spacing distance between the two adjacent main body portions 121 located in the same recessed hole 111 is greater than 9.5 mm, such that an electrical clearance between the two adjacent main body portions 121 is greater than 9.5 mm, so as to meet an insulation requirement.

For example, when two adjacent electrical connection members 12 are connected to a loop having a voltage greater than 220 V and less than or equal to 660 V, and the parts of the two adjacent main body portions 121 located at the position of the recessed hole 111 are not separated by an insulating component, the spacing distance between the two adjacent main body portions 121 may be 9.6 mm, 10 mm, 10.5 mm, 11 mm, 12 mm, 13 mm, 14 mm, 15 mm, 16 mm, 17 mm, 18 mm, or the like.

In some embodiments, the spacing distance between the parts of the two adjacent main body portions 121 located on the inner side of the hole edge of the same recessed hole 111 is greater than 19 mm.

In specific embodiments, when two adjacent electrical connection members 12 are connected to a higher-voltage loop, and the parts of the two adjacent main body portions 121 located at the position of the recessed hole 111 are not separated by an insulating component, the spacing distance between the two adjacent main body portions 121 located in the same recessed hole 111 is greater than 19 mm, such that a clearance distance between the two adjacent main body portions 121 is greater than 19 mm, so as to meet an insulation requirement.

For example, when two adjacent electrical connection members 12 are connected to a loop having a voltage greater than 660 V, and the parts of the two adjacent main body portions 121 located at the position of the recessed hole 111 are not separated by an insulating component, the spacing distance between the two adjacent main body portions 121 may be 19.1 mm, 19.5 mm, 19.8 mm, 20 mm, 20.5 mm, 21 mm, 21.5 mm, 22 mm, 22.5 mm, 23 mm, or a larger dimension.

In some other embodiments, as shown in FIG. 3, FIG. 4, FIG. 11, and FIG. 12, the housing main body 11 has a first surface 112 and a second surface 113 that are oppositely disposed, the main body portion 121 is located between the first surface 112 and the second surface 113, the recessed hole 111 penetrates through the first surface 112 and the second surface 113, and each spacing area 1211 penetrates through the first surface 112 and the second surface 113 by means of the corresponding recessed hole 111.

The first surface 112 and the second surface 113 may be two surfaces of the housing main body 11 along the thickness direction, the main body portion 121 of each electrical connection member 12 is located between the first surface 112 and the second surface 113, the recessed hole 111 penetrates through the first surface 112 and the second surface 113 of the housing main body 11, that is, the recessed hole 111 is a through hole penetrating through the housing main body 11. Correspondingly, the spacing area 1211 between two adjacent main body portions 121 also penetrates through the housing main body 11 by means of the corresponding recessed hole 111.

In this way, because the recessed hole 111 penetrates through the housing main body 11, after the first housing 101 is injection molded and cooled, the connection rib 126 can be disconnected directly at the position of the through hole, and the connection rib 126 is disconnected without having to consider the impact on a hole bottom portion of the recessed hole 111, making the forming process simpler and more efficient.

In some embodiments, as shown in FIG. 3, FIG. 4, FIG. 11, and FIG. 12, the high-voltage power distribution device 10 further comprises a second housing 102 connected to the first housing 101, some of the recessed holes 111 are first holes 1111, the second housing 102 is provided with at least one insulating protrusion 1021 at a position corresponding to each of the first holes 1111, the insulating protrusion 1021 is inserted into the first hole 1111 at a position between the two adjacent main body portions 121, and at least one of the insulating protrusions 1021 is provided between the two adjacent main body portions 121 that correspond to the same first hole 1111.

In the embodiments, the housing main body 11 is provided with a plurality of recessed holes 111. Some of the recessed holes 111 are first holes 1111, and the others of the recessed holes 111 are non-first holes 1111. The high-voltage power distribution device 10 further comprises the second housing 102 connected to the first housing 101, and the second housing 102 is provided with the insulating protrusion 1021 at the position corresponding to each of the first holes 1111. When the first housing 101 is connected to the second housing 102, the insulating protrusion 1021 can be inserted into the first hole 1111 from the position between the two adjacent main body portions 121, thereby correspondingly separating the two adjacent main body portions 121, such that the two adjacent main body portions 121 can be insulated by means of the insulating protrusion 1021 inserted therebetween.

In addition, in specific embodiments, at least one insulating protrusion 1021 is provided between two adjacent main body portions 121 that correspond to the same first hole 1111, i.e., there may be one insulating protrusion 1021 between two adjacent main body portions 121 located in the same first hole 1111. In other words, the two adjacent main body portions 121 are insulated by means of one insulating protrusion 1021. Alternatively, there may be a plurality of insulating protrusions 1021 between two adjacent main body portions 121 located in the same first hole 1111, and the plurality of insulating protrusions 1021 are sequentially disposed along the spacing direction between the two adjacent main body portions 121. In other words, the two adjacent main body portions 121 are insulated by means of a plurality of stacked insulating protrusions 1021.

In some embodiments, as shown in FIG. 3, FIG. 4, FIG. 11, and FIG. 12, in the direction from the second surface 113 toward the first surface 112, the insulating protrusion 1021 extends into the first hole 1111 from the second surface 113, and the height of a protruding part of the insulating protrusion 1021 relative to the second surface 113 is greater than the heights of protruding parts of the corresponding two main body portions 121 relative to the second surface 113.

The direction from the second surface 113 toward the first surface 112 is an axial direction of the recessed hole 111, i.e., a thickness direction of the housing main body 11. The second housing 102 is convexly provided with insulating protrusions 1021 at positions in a lower space of the second surface 113 facing away from the first surface 112, each insulating protrusion 1021 extends into the corresponding first hole 1111 from the second surface 113, and the height of a protruding part of the insulating protrusion 1021 relative to the second surface 113 is greater than the heights of protruding parts of the corresponding two main body portions 121 relative to the second surface 113, such that the two adjacent main body portions are disposed at two sides of the corresponding insulating protrusion 1021, respectively, and a current needs to creep across the corresponding insulating protrusion 1021 to reach the main body portion 121 on the other side from the main body portion 121 on one side, thereby implementing insulation.

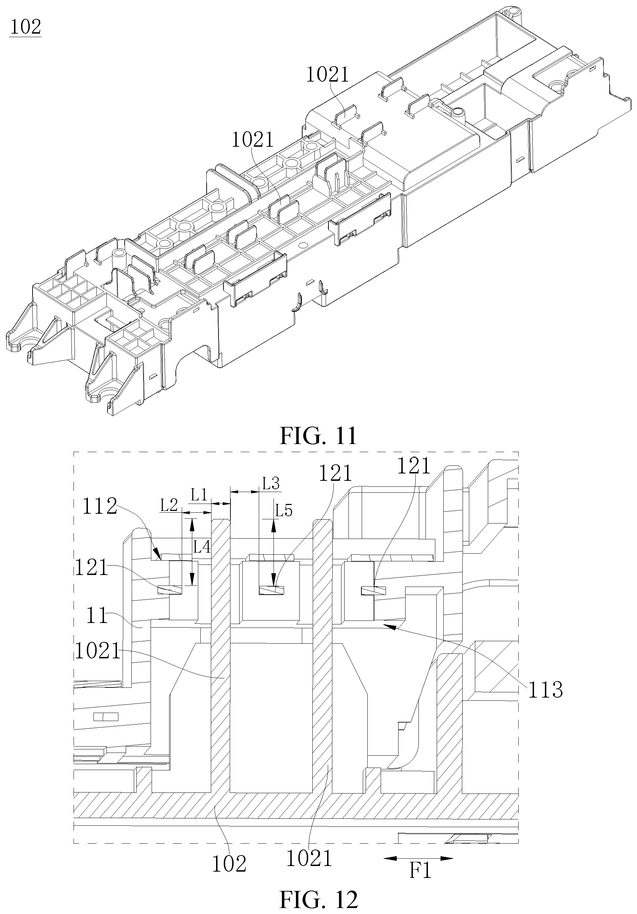

In specific embodiments, as shown in FIG. 12, one of the insulating protrusions 1021 is provided between the two adjacent main body portions 121; along a spacing direction between the two adjacent main body portions 121, the thickness of the insulating protrusion 1021 is Ll,and spacing distances between the insulating protrusion 1021 and the two adjacent main body portions 121 are L2 and L3, respectively; along the direction from the second surface 113 toward the first surface 112, the heights of protruding parts of the insulating protrusion 1021 relative to the two adjacent main body portions 121 are L4 and L5, respectively; the sum of L1, L2, L3, L4, and L5 is greater than 3 mm.

In the embodiments, when one insulating protrusion 1021 is provided between two adjacent main body portions 121, the creepage distance between the two adjacent main body portions 121 includes the thickness dimension L1 of the insulating protrusion 1021, a spacing distance dimension L2 between one main body portion 121 and the insulating protrusion 1021, a spacing distance dimension L3 between another main body portion 121 and the insulating protrusion 1021, the height dimension L4 of a protruding part of the insulating protrusion 1021 relative to one main body portion 121 along the direction from the second surface 113 toward the first surface 112, and the height dimension L5 of a protruding part of the insulating protrusion 1021 relative to the another main body portion 121 along the direction from the second surface 113 toward the first surface 112, and the sum of the five sizes is greater than 3 mm. This ensures that the creepage distance between the two adjacent main body portions 121 separated by the insulating protrusion 1021 meets a requirement of being greater than 3 mm.

In specific embodiments, when two adjacent electrical connection members 12 are connected to a low-voltage loop, a creepage distance between the two adjacent main body portions 121 located in the same recessed hole 111 is greater than 3 mm, so as to meet an insulation requirement.

For example, the creepage distance between the two adjacent main body portions 121 may be 4 mm, 5 mm, 6 mm, 7 mm, 8 mm, 9 mm, or the like.

In some other embodiments, the sum of L1, L2, L3, L4, and L5 is greater than 9.5 mm, that is, the creepage distance between the two adjacent main body portions 121 is greater than 9.5 mm.

In this way, when two adjacent electrical connection members 12 are connected to a high-voltage loop, a creepage distance between the two adjacent main body portions 121 located in the same recessed hole 111 is greater than 9.5 mm, so as to meet an insulation requirement.

For example, when two adjacent electrical connection members 12 are connected to a loop having a voltage greater than 220 V and less than or equal to 660 V, the creepage distance between the two adjacent main body portions 121 may be 9.6 mm, 10 mm, 10.5 mm, 11 mm, 12 mm, 13 mm, 14 mm, 15 mm, 16 mm, 17 mm, 18 mm, or the like.

In some other embodiments, the sum of L1, L2, L3, L4, and L5 is greater than 19 mm, that is, the creepage distance between the two adjacent main body portions 121 is greater than 9.5 mm.

In this way, when two adjacent electrical connection members 12 are connected to a higher-voltage loop, a creepage distance between the two adjacent main body portions 121 located in the same recessed hole 111 is greater than 19 mm, so as to meet an insulation requirement.

For example, when two adjacent electrical connection members 12 are connected to a loop having a voltage greater than 660 V, a creepage distance between two adjacent main body portions 121 may be 19.1 mm, 19.5 mm, 19.8 mm, 20 mm, 20.5 mm, 21 mm, 21.5 mm, 22 mm, 22.5 mm, 23 mm, or a larger dimension.

In some embodiments, the spacing distance between the insulating protrusion 1021 and the adjacent main body portion 121 is greater than or equal to 1 mm. In other words, there is a spacing distance of at least 1 mm between the insulating protrusion 1021 and the main body portion 121 adjacent to the insulating protrusion, such that the insulating protrusion 1021 can smoothly extend out of the first hole 1111 without interfering with the corresponding main body portion 121.

In specific embodiments, the spacing distance between the insulating protrusion 1021 and the adjacent main body portion 121 may be 1 mm, 1.2 mm, 1.4 mm, 1.5 mm, 1.6 mm, 1.8 mm, 1.9 mm, 2.0 mm, or the like.

In some embodiments, as shown in FIG. 3, FIG. 8, and FIG. 10, along the direction perpendicular to the spacing direction between the two adjacent main body portions 121, each of the two opposite sidewalls of the first hole 1111 is provided with a recess 1112, and two opposite side portions of the insulating protrusion 1021 are clamped into the corresponding recesses 1112, respectively.

In the embodiments, along the direction perpendicular to the spacing direction between the two adjacent main body portions 121, i.e., along the width direction of the insulating protrusion 1021, at least one side of the insulating protrusion 1021 can be clamped into the corresponding recess 1112 on the hole wall of the first hole 1111, and the insulating protrusion 1021 can be positioned by means of the recess 1112, thereby helping further improve assembly accuracy.

In specific embodiments, along the direction perpendicular to the spacing direction between the two adjacent main body portions 121, each of the two opposite sidewalls of the first hole 1111 is provided with a recess 1112, and two opposite side portions of the insulating protrusion 1021 are respectively clamped into the corresponding recesses 1112, respectively.

In other words, in the width direction of the insulating protrusion 1021, the two side portions of the insulating protrusion 1021 are clamped into the recesses 1112 on the two sidewalls of the recessed hole 111, respectively.

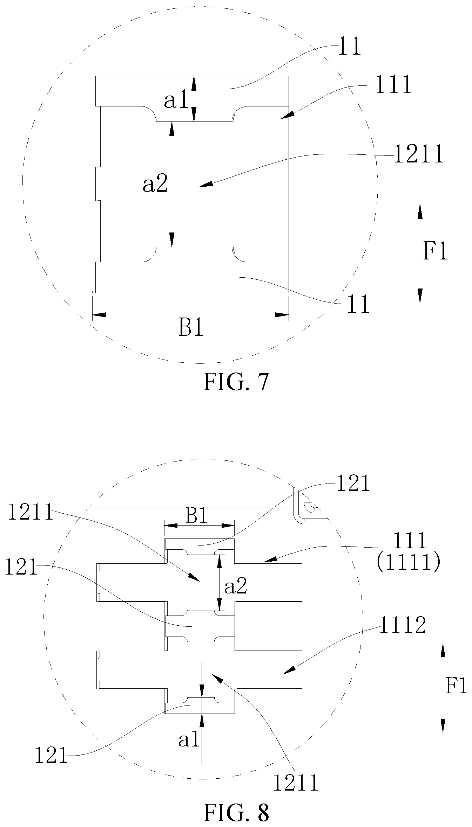

In some embodiments, as shown in FIG. 7 and FIG. 8, a width dimension B1 of the recessed hole 111 along the direction perpendicular to the spacing direction between the two adjacent main body portions 121 is 4 mm to 6 mm.

In the embodiments, along the direction perpendicular to the spacing direction between the two adjacent main body portions 121, i.e., along the width direction of the recessed hole 111, the width dimension of the recessed hole 111 is within the above-mentioned dimension range, such that the width of the recessed hole 111 can accommodate the connection rib 126 having the specific width, and a specific gap can be reserved between the connection rib 126 and the hole edge for a cutting tool to extend into, so as to cut off the connection rib 126. In addition, the structural strength of the housing main body 11 is not reduced due to an excessively large opening of the recessed hole 111.

In specific embodiments, the width dimension of the recessed hole 111 may be 4 mm, 4.2 mm, 4.4 mm, 4.5 mm, 4.8 mm, 5 mm, 5.2 mm, 5.5 mm, 5.8 mm, 6 mm, or the like.

It can be understood that, in the above-mentioned embodiments, the shape of the recessed hole 111 may be a regular shape such as a rectangle, a circle, or a polygon, or may be an irregular shape. The shape of the recessed hole 111 is not limited in the present application, and a suitable shape may be selected as required during design.

In some embodiments, as shown in FIG. 3 to FIG. 5 and FIG. 13, the housing main body 11 is further provided with an interface 13 for adaptive insertion of an external electrical connector, the interface 13 has an accommodating cavity 131 penetrating through the surface of the housing main body 11, each of the electrical connection members 12 further includes a second connection portion 123, the second connection portion 123 is exposed to a cavity wall surface of the accommodating cavity 131 and is located in the accommodating cavity 131, and the second connection portion 123 is used to electrically connect to the electrical connector inserted into the interface 13.

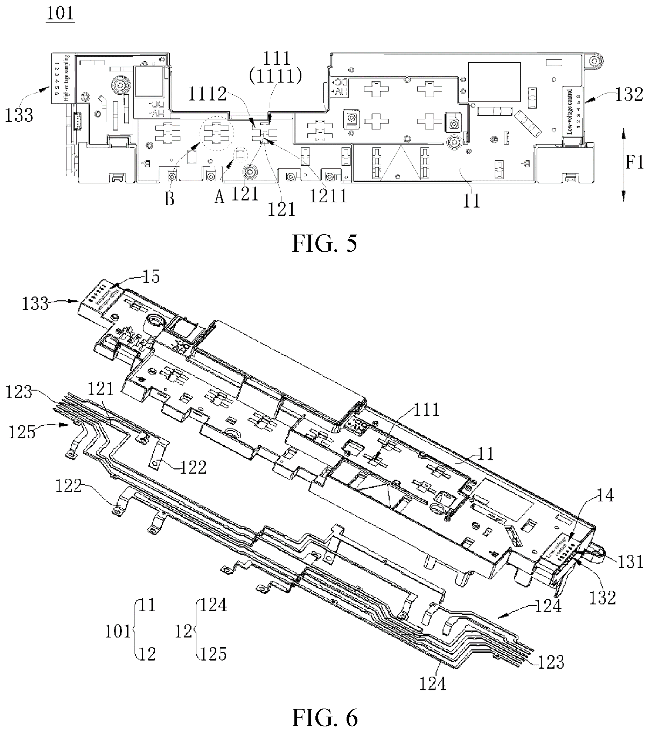

In the embodiments, as shown in FIG. 5, FIG. 6, FIG. 9, and FIG. 13, each electrical connection member 12 further includes a second connection portion 123, and the second connection portion 123 is used to electrically connect to an electrical connector outside the high-voltage power distribution device 10. In this way, the first housing 101 is provided with the interface 13 adapted to the external electrical connector, the electrical connector can be adaptively inserted into the interface 13, the second connection portion 123 of each electrical connection member 12 is led into the internal accommodating cavity 131 of the interface 13, and each second connection portion 123 is exposed to the cavity wall surface of the accommodating cavity 131 of the interface 13. When the external electrical connector is inserted into the interface 13, a connection terminal in the electrical connector electrically contacts the corresponding second connection portion 123, such that each electrical connection member 12 is in communication with an external circuit by means of the corresponding electrical connector.

In this way, the second connection portion 123 of each electrical connection member 12 for connecting to the external circuit is led out into one or a plurality of interfaces 13, an electrical connection is established in a form of inserting an external electrical connector into the interface 13, and each second connection portion 123 is accommodated in the accommodating cavity 131 of the interface 13, and does not need to protrude beyond the surface of the housing main body 11, thereby effectively reducing a risk of interference between the second connection portion 123 and another adjacent component. In addition, the second connection portion 123 does not need to be led out by means of an adapter or a wire, thereby helping simplify the internal structure of the high-voltage power distribution device 10 and improve the assembly efficiency.

In some embodiments, as shown in FIG. 5, FIG. 6, FIG. 9, and FIG. 13, the second connection portion 123 protrudes from the cavity wall surface of the accommodating cavity 131 and is disposed facing an opening of the accommodating cavity 131.

In the embodiments, the second connection portion 123 is suspended in the accommodating cavity 131 of the interface 13, such that the interface 13 as a whole can function as a male connector to be adaptively inserted into an external female connector, arrangement of the overall structure of the interface 13 is simpler, and the connection mode with the external electrical connector is quite direct.

In some embodiments, as shown in FIG. 5, FIG. 6, FIG. 9, and FIG. 13, some of the electrical connection members 12 are first connection members 124, the others of the electrical connection members 12 are second connection members 125, the interface 13 includes a first interface 132 and a second interface 133 that are disposed at an interval, the second connection portion 123 of each of the first connection members 124 is located in the accommodating cavity 131 of the first interface 132, and the second connection portion 123 of each of the second connection members 125 is located in the accommodating cavity 131 of the second interface 133.

In the embodiments, the first housing 101 is provided with the first interface 132 and the second interface 133, where the electrical connection member 12 comprises at least one first connection member 124 and at least one second connection member 125, the second connection portion 123 of each first connection member 124 being correspondingly located in the accommodating cavity 131 of the first interface 132, and the second connection portion 123 of each second connection member 125 being correspondingly located in the accommodating cavity 131 of the second interface 133, such that the first connection member 124 and the second connection member 125 are connected to corresponding circuits by connecting the first interface 132 and the second interface 133 to the corresponding external connectors, respectively. In this way, different electrical connection members 12 can be distinguished and isolated in space, thereby helping reduce a risk of electrical interference or connection confusion.

It can be understood that the first connection member 124 and the second connection member 125 may be classified based on different use functions, and correspondingly, a first interface 132 and a second interface 133 having different functions are disposed on the first housing 101. Alternatively, the first connection member 124 and the second connection member 125 may be classified based on different connection objects, and correspondingly, a first interface 132 and a second interface 133 connected to different connectors are disposed on the first housing 101. Alternatively, the first connection member 124 and the second connection member 125 may be classified based on different electrical characteristics, and correspondingly, a first interface 132 and a second interface 133 with different electrical characteristics are disposed on the first housing 101. For example, the first connection member 124 may be a connection member responsible for connecting to a high-voltage power supply side, and the second connection member 125 may be a connection member configured to connect to a load.

In some embodiments, the first interface 132 and the second interface 133 are disposed on the same side of the housing main body 11.

In the embodiments, the first interface 132 and the second interface 133 are disposed on the same side of the housing main body 11, that is, the first interface 132 and the second interface 133 are plugged with the external electrical connector on the same side of the high-voltage power distribution device 10. This facilitates centralized connection with the external electrical connector, thereby helping simplify the layout of external connection lines, reduce line crossing and confusion, and improve the regularity and reliability of connection.

It can be understood that, when the first interface 132 and the second interface 133 are disposed on the same side of the housing main body 11, the first interface 132 and the second interface 133 need to meet requirements for a clearance distance and a creepage distance, such that the first interface 132 and the second interface 133 cannot be electrically connected.

In some other embodiments, different from the above-mentioned embodiments, the housing main body 11 has a plurality of different side portions, and the first interface 132 and the second interface 133 are disposed on different sides of the housing main body 11.

In the embodiments, the first interface 132 and the second interface 133 are disposed on different sides of the housing main body 11, i.e., the first interface 132 is disposed on one side portion of the housing main body 11, the second interface 133 is disposed on the other side portion of the housing main body 11, and the first interface 132 and the second interface 133 are located on different sides of the housing main body 11 in space, such that the first interface 132 and the second interface 133 can better adapt to connection requirements of external electrical connectors at different positions, and connection is more flexible and convenient.

It can be understood that, when the first interface 132 and the second interface 133 are disposed on different sides of the housing main body 11, the first interface 132 and the second interface 133 also need to meet requirements for a clearance distance and a creepage distance, such that the first interface 132 and the second interface 133 cannot be electrically connected.

In specific embodiments, the first connection portion 122 of each of the first connection members 124 is connected to a low-voltage loop in the high-voltage power distribution device 10. For example, the first connection portion 122 is connected to a control terminal of a conduction coil of an electromagnetic relay, e.g., connected to a control terminal of a main positive relay, or connected to a control terminal of a main negative relay, or connected to a control terminal of a pre-charge relay.

In specific embodiments, the first connection portion 122 of each of the second connection members 125 is connected to a high-voltage loop in the high-voltage power distribution device 10. For example, the first connection portion 122 is connected to a high-voltage sampling copper busbar in the high-voltage power distribution device 10, e.g., connected to a high-voltage busbar connected to an output terminal of a battery cell group, or connected to a high-voltage busbar connected to an input terminal of a battery cell group, or connected to a high-voltage busbar connected to a high-voltage contact of a relay.

In specific embodiments, in the first interface 132, a clearance distance between two adjacent second connection portions 123 is greater than 3 mm, so as to meet an electrical safety requirement.

For example, in the first interface 132, the clearance distance between two adjacent second connection portions 123 may be 4 mm, 5 mm, 6 mm, 7 mm, 8 mm, 9 mm, or the like. Alternatively, when the second connection portion 123 is connected to a high-voltage loop, the clearance distance between two adjacent second connection portions 123 may be 9.5 mm, 10 mm, 11 mm, or even a larger dimension.

Alternatively, in other embodiments, in the first interface 132, an insulating spacer 16 may be further disposed between two adjacent second connection portions 123 for separation, and a creepage distance between the two adjacent second connection portions 123 is greater than 3 mm, so as to meet an electrical safety requirement.

It can be understood that, in the embodiments, in the first interface 132, two adjacent second connection portions 123 protrude from the cavity wall of the accommodating cavity 131 of the first interface 132, the insulating spacer 16 also protrudes at a position between the two second connection portions 123, and the protruding height of the insulating spacer 16 is higher than the protruding height of the two second connection portions 123, such that the current between the two second connection portions 123 needs to creep across the insulating spacer 16 to implement conduction. On this basis, the creepage distance between the two adjacent second connection portions 123 is designed to be greater than 3 mm, so as to meet a requirement for electrical safety between the two second connection portions 123.

For example, in the first interface 132, the creepage distance between two adjacent second connection portions 123 may be 4 mm, 5 mm, 6 mm, 7 mm, 8 mm, 9 mm, or the like. Alternatively, when the second connection portion 123 is connected to a high-voltage loop, the creepage distance between two adjacent second connection portions 123 may be 9.5 mm, 10 mm, 11 mm, or even a larger dimension.

In specific embodiments, in the second interface 133, a clearance distance between two adjacent second connection portions 123 is greater than 3 mm, so as to meet an electrical safety requirement.

For example, in the second interface 133, the clearance distance between two adjacent second connection portions 123 may be 4 mm, 5 mm, 6 mm, 7 mm, 8 mm, 9 mm, or the like. Alternatively, when the second connection portion 123 is connected to a high-voltage loop, the clearance distance between two adjacent second connection portions 123 may be 9.5 mm, 10 mm, 11 mm, or even a larger dimension.

Alternatively, in other embodiments, in the second interface 133, an insulating spacer 16 may be further disposed between two adjacent second connection portions 123 for separation, and a creepage distance between the two adjacent second connection portions 123 is greater than 3 mm, so as to meet an electrical safety requirement.

It can be understood that, in the embodiments, in the second interface 133, two adjacent second connection portions 123 protrude from the cavity wall of the accommodating cavity 131 of the first interface 132, the insulating spacer 16 also protrudes at a position between the two second connection portions 123, and the protruding height of the insulating spacer 16 is higher than the protruding height of the two second connection portions 123, such that the current between the two second connection portions 123 needs to creep across the insulating spacer 16 to implement conduction. On this basis, the creepage distance between the two adjacent second connection portions 123 is designed to be greater than 3 mm, to meet a requirement for electrical safety between the two second connection portions 123.

For example, in the second interface 133, the creepage distance between two adjacent second connection portions 123 may be 4 mm, 5 mm, 6 mm, 7 mm, 8 mm, 9 mm, or the like. Alternatively, when the second connection portion 123 is connected to a high-voltage loop, the creepage distance between two adjacent second connection portions 123 may be 9.5 mm, 10 mm, 11 mm, or even a larger dimension.

In specific embodiments, the creepage distance between the first interface 132 and the second interface 133 is greater than 3 mm, so as to meet an electrical safety requirement.

It can be understood that, in the embodiments, the first connection portion 122 is accommodated in the internal space of the first interface 132, and the second connection portion 123 is accommodated in the internal space of the second interface 133. In this way, in space, the first interface 132 and the second interface 133 are isolated from each other by means of respective sidewalls, such that a current between one first connection portion 122, closest to the second interface 133, in the first interface 132 and one second connection portion 123, closest to the first interface 132, in the second interface 133 needs to creep across the sidewall between the two interfaces 13 to implement conduction. On this basis, the creepage distance between the first interface 132 and the second interface 133 is designed to be greater than 3 mm, so as to meet a requirement for electrical safety between the first interface 132 and the second interface 133.

For example, the creepage distance between the first interface 132 and the second interface 133 may be 4 mm, 5 mm, 6 mm, 7 mm, 8 mm, 9 mm, or the like. Alternatively, when the first connection portion 122 and the second connection portion 123 are connected to a high-voltage loop, the creepage distance between the first interface 132 and the second interface 133 may be 9.5 mm, 10 mm, 11 mm, or even a larger dimension.

In this way, in the embodiments, the clearance distance or creepage distance between two interconnected second connection portions 123 located in the first interface 132 or the second interface 133 meets an electrical safety requirement, and the clearance distance or creepage distance between the first interface 132 and the second interface 133 meets the electrical safety requirement.

In some embodiments, as shown in FIG. 3, FIG. 5, and FIG. 13, the housing main body 11 is further provided with a first identification portion 14 and a second identification portion 15, the first identification portion 14 is disposed on a side portion of the first interface 132, the second identification portion 15 is disposed on a side portion of the second interface 133, and the first identification portion 14 and the second identification portion 15 have different identifiers.

In this way, the corresponding first identification portion 14 and second identification portion 15 are disposed near the first interface 132 and the second interface 133, respectively, and the two identification portions are provided with different identification information, such that a user can distinguish the first interface 132 and the second interface 133 by means of the corresponding identification information.

For example, when each electrical connection member 12 corresponding to the first interface 132 is connected to a low-voltage control loop, the identifier of the first identification portion 14 may be "low-voltage control interface". When each electrical connection member 12 corresponding to the second interface 133 is connected to a high-voltage sampling loop, the identifier of the second identification portion 15 may be "high-voltage sampling interface".

In some embodiments, a spacing distance between the two adjacent main body portions 121 is 5 mm to 25 mm.

The spacing distance between the two adjacent main body portions 121 is set to be within the above-mentioned range. On the one hand, the internal space of the housing main body 11 can be reasonably utilized to arrange the main body portions 121 of the electrical connection members 12, such that the main body portions 121 can have reasonable arrangement positions. On the other hand, the spacing distance between two adjacent main body portions 121 can also meet the electrical safety requirement, and the risk of electrical failure due to an excessively high voltage is reduced.

For example, the spacing distance between the two adjacent main body portions 121 may be 5 mm, 7 mm, 10 mm, 12 mm, 14 mm, 15 mm, 16 mm, 18 mm, 20 mm, 22 mm, 24 mm, 25 mm, or the like.

It can be understood that a larger voltage passing through the two adjacent main body portions 121 indicates a corresponding increase in the spacing distance that needs to be reserved between the two adjacent main body portions.

In some embodiments, the width dimension of the electrical connection member 12 along a direction perpendicular to an extension direction of the electrical connection member 12 is 0.5 mm to 10 mm.

The width dimension of the electrical connection member 12 is set to be within the above-mentioned range, such that on the one hand, the electrical connection member 12 can have a specific structural strength, and on the other hand, the width of each electrical connection member 12 can also meet the electrical safety requirement.

For example, the width dimension of each electrical connection member 12 may be 0.5 mm, 1.0 mm, 2 mm, 3 mm, 4 mm, 5 mm, 6 mm, 7 mm, 8 mm, 9 mm, 10 mm, or the like.

It can be understood that a larger voltage of a corresponding access point of each electrical connection member 12 indicates a corresponding increase in the width dimension of the electrical connection member 12.

In some embodiments, the thickness dimension of the electrical connection member 12 along the recess direction of the recessed hole 111 is 0.5 mm to 2.5 mm.

The thickness dimension of the electrical connection member 12 is set to be within the above-mentioned range, such that on the one hand, the electrical connection member 12 can have the specific structural strength, and on the other hand, the thickness of each electrical connection member 12 can also meet the electrical safety requirement.

For example, the thickness dimension of each electrical connection member 12 may be 0.5 mm, 0.6 mm, 0.8 mm, 1.0 mm, 1.2 mm, 1.5 mm, 1.8 mm, 2.0 mm, 2.2 mm, 2.4 mm, 2.5 mm, or the like.

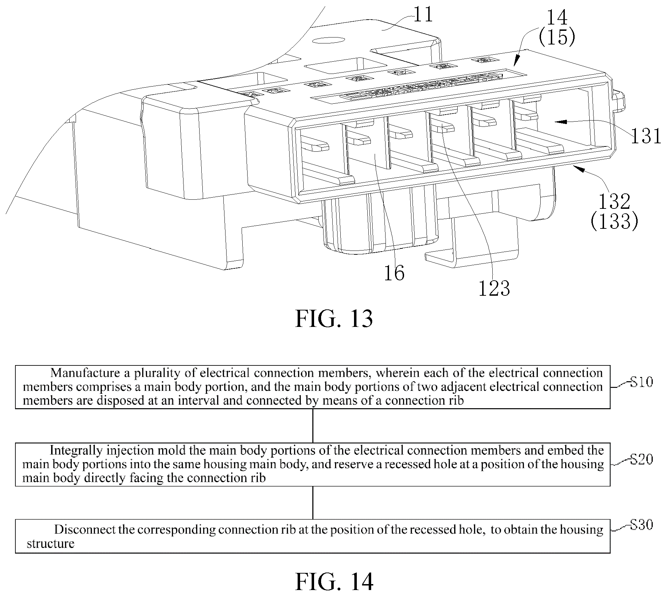

Referring to FIG. 14 and FIG. 16 to FIG. 18 together, further provided in some other embodiments of the present application is a forming method for a housing structure of a high-voltage power distribution device, used to manufacture a housing structure of the high-voltage power distribution device provided in the above-mentioned embodiments, wherein the housing structure may be the first housing 101 in the above-mentioned embodiments.

In some embodiments, the forming method for the housing structure of the high-voltage power distribution device 10 includes the following steps:

S10: Manufacturing a plurality of electrical connection members 12, wherein each of the electrical connection members 12 includes a main body portion 121, and the main body portions 121 of two adjacent electrical connection members 12 are disposed at an interval and connected by means of a connection rib 126;

S20: Integrally injection molding the main body portions 121 of the electrical connection members 12 and embedding the main body portions into the same housing main body 11, and reserving a recessed hole 111 at a position of the housing main body 11 directly facing the connection rib 126; and

S30: Disconnecting the corresponding connection rib 126 at the position of the recessed hole 111 to obtain the housing structure.

In step S10, according to the electrical design requirements of the high-voltage power distribution device 10, the plurality of electrical connection members 12 are manufactured by using a suitable conductive material (for example, metal having excellent conductivity, such as copper or aluminum). As shown in FIG. 16, each electrical connection member 12 has a main body portion 121, and the main body portions 121 of two adjacent electrical connection members 12 are disposed at an interval and connected by means of a connection rib 126. A function of the connection rib 126 is to facilitate unified operation and positioning of the plurality of electrical connection members 12 in an early manufacturing process, so as to ensure that relative positions of components are accurate. For example, in the mold machining process, the connection rib 126 can enable a group of electrical connection members 12 as a whole to be transported, mounted, and so on, thereby improving production efficiency.

It can be understood that, in specific embodiments, the electrical connection member 12 may be manufactured by using a process such as forging, stamping, or die molding. The main body portions 121 of two adjacent electrical connection members 12 being disposed at an interval and connected by means of the connection rib 126 means that the connection rib 126 is disposed at one or a plurality of positions between two adjacent main body portions 121.

In step S20, an injection mold for the housing main body 11 is manufactured by using a material having good insulation performance. An embedding position adapted to the main body portion 121 of each electrical connection member 12 is reserved in the mold, and the embedding position matches the shape and the dimension of the main body portion 121 of the electrical connection member 12. In the injection molding process, the main body portion 121 of each electrical connection member 12 is accurately placed at a corresponding position of the mold, then a molten insulating material is injected into a mold cavity, and injection molding pressure is utilized to cause the insulating material to fully wrap the main body portion 121 of the electrical connection member 12, thereby implementing integral injection molding and embedding. Such an integral forming method not only simplifies the assembly process, but also greatly enhances the firmness of the connection between the electrical connection member 12 and the housing main body 11. Meanwhile, a recessed hole 111 is reserved at a position of the housing main body 11 directly facing each connection rib 126, and at least a part of the recessed hole 111 is located in a spacing area 1211 between two adjacent main body portions 121, that is, a part of the recessed hole 111 or the entire recessed hole 111 is disposed in the spacing area 1211 between the two adjacent main body portions 121, such that the connection rib 126 between the two adjacent main body portions 121 can be exposed by means of the recessed hole 111, as shown in FIG. 17 and FIG. 18.

In step S30, after the integral injection molding and embedding are completed and the recessed hole 111 is reserved, the corresponding connection rib 126 is disconnected at the position of the recessed hole 111. For example, the connection rib 126 may be disconnected by using a method such as punching or laser cutting, such that the main body portions 121 of the two adjacent electrical connection members 12 originally connected together by means of the connection rib 126 are disconnected, thereby implementing mutual electrical isolation in the housing main body 11.

In some examples, the first housing 101 may be manufactured by using the following method: The electrical connection member 12 is manufactured by using a material having good conductivity, such as copper or aluminum, according to design requirements, and the electrical connection member 12 having the main body portion 121 and the connection rib 126 is manufactured by using a process such as stamping, forging, and cutting. The connection rib 126 is disposed at one or a plurality of positions between two adjacent main body portions 121 for connection. A mold for the housing main body 11 is manufactured by using a suitable insulating material according to design requirements. During mold design, embedding positions of main body portions 121 of a plurality of electrical connection members 12 are accurately reserved, dimensions and shapes of the embedding positions accurately matching dimensions and shapes of the main body portions 121 of the electrical connection members 12, such that each main body portion 121 can be tightly connected to the housing main body 11 after being embedded. In addition, one or a plurality of hole positions are also reserved. A position of the recessed hole 111 corresponds to the position of the connection rib 126 between the main body portions 121 of the electrical connection members 12. Then the main body portion 121 of the electrical connection member 12 is accurately placed at the corresponding position of the mold for forming the housing main body 11, and then the molten insulating material is injected into the mold. The integral injection molding process is used to firmly combine the housing main body 11 and the main body portion 121 of the electrical connection member 12, and the recessed hole 111 is formed at the position corresponding to each connection rib 126. Finally, the corresponding connection rib 126 is disconnected at the position of each recessed hole 111 by using a process such as punching or laser cutting, such that the two interconnected main body portions 121 are electrically separated to obtain the housing structure.

According to the forming method for a housing structure in the embodiments, before injection molding and during injection molding, two adjacent electrical connection members 12 are positioned and connected by disposing the connection rib 126, and the connection rib 126 can play a role in positioning and supporting the adjacent electrical connection members 12, such that the plurality of electrical connection members 12 can be integrally injection molded as an integral member with the housing main body 11. During injection molding, no relative positional movement occurs between the electrical connection members 12, thereby simplifying the operation of positioning the electrical connection members 12 during injection molding, such that the disposed position of the electrical connection member 12 can be more accurately placed in the preset position of the mold. In addition, during injection molding, a risk that the electrical connection member 12 moves with the flow of the injection molding material can also be reduced, and the position of the electrical connection member 12 after formation is more accurate. In addition, after injection molding, formation and cooling, the connection rib 126 is disconnected from the recessed hole 111, to disconnect the connection rib 126 between the two adjacent main body portions 121, namely, the two adjacent electrical connection members 12, such that the two electrical connection members 12 are insulated from each other, and the electrical connection members 12 have a normal connection function and can establish connections to other electrical connection structures inside and outside the high-voltage power distribution device 10, thereby providing a guarantee of improving the assembly efficiency of the high-voltage power distribution device 10.

Referring to FIG. 15 and FIG. 16 to FIG. 18 together, further provided in some other embodiments of the present application is another forming method for a housing structure of a high-voltage power distribution device 10, used to manufacture a housing structure of the high-voltage power distribution device 10 provided in the above-mentioned embodiments, wherein the housing structure may be the assembly structure of the first housing 101 and the second housing 102 in the above-mentioned embodiments.

In specific embodiments, the forming method for the housing structure of the high-voltage power distribution device 10 includes the following steps:
S10: Manufacturing a plurality of electrical connection members 12, wherein each of the electrical connection members 12 includes a main body portion 121, and the main body portions 121 of two adjacent electrical connection members 12 are disposed at an interval and connected by means of a connection rib 126;
S20: Integrally injection molding the main body portions 121 of the electrical connection members 12 and embedding the main body portions into the same housing main body 11, and reserving a recessed hole 111 at a position of the housing main body 11 directly facing the connection rib 126;
S301: Disconnecting the corresponding connection rib 126 at the position of the recessed hole 111 to obtain a first housing 101;
S40: Manufacturing a second housing 102 provided with several insulating protrusions 1021 protruding from a surface thereof, wherein sizes of the insulating protrusions 1021 are adapted to sizes of at least some of the recessed holes 111; and
S50: connecting the first housing 101 and the second housing 102, and inserting the insulating protrusions 1021 into the recessed holes 111 adapted to the insulating protrusions at a position between two adjacent main body portions 121, to obtain the housing structure.

Different from the above-mentioned embodiments, in the embodiments of the present application, the housing structure includes the first housing 101 and the second housing 102. The first housing 101 is obtained after the corresponding connection rib 126 is disconnected at the position of the recessed hole 111, and then the second housing 102 is manufactured on this basis. The surface of the second housing 102 is convexly provided with insulating protrusions 1021, and the insulating protrusions 1021 are adapted to some of the recessed holes 111 on the first housing 101, such that after the first housing 101 is connected to the second housing 102, the insulating protrusions 1021 can be inserted into the corresponding recessed holes 111, and separate the main body portions of the two adjacent electrical connection members 12 that correspond to the recessed holes 111, and the two adjacent main body portions 121 can be insulated by means of the insulating protrusions 1021 inserted therebetween.

In step S40, an injection mold for the second housing 102 is manufactured by using a material having good insulation performance. A cavity for forming the insulating protrusions 1021 is designed to be disposed in the mold, and the shape and the size of the cavity need to meet an insulation requirement between two main body portions 121 to be separated and be capable of being adaptively inserted into the corresponding recessed hole 111.

In the above-mentioned embodiments, as shown in FIG. 17 and FIG. 18, the step of manufacturing a plurality of electrical connection members 12 further includes disposing a pre-cut portion 1261 on each of the connection ribs 126, where the pre-cut portion 1261 includes at least one of a reduced-thickness portion and a reduced-width portion.

During manufacturing of the electrical connection members 12, after the main body portions 121 and the connection ribs 126 are formed, the connection ribs 126 are processed, and the pre-cut portion 1261 is disposed on each of the connection ribs 126. The thickness dimension of the pre-cut portion 1261 is smaller than the thickness dimension of another position of the connection rib 126, or the width dimension of the pre-cut portion 1261 is smaller than the width dimension of another position of the connection rib 126, thereby making preparations for subsequently disconnecting the connection rib 126 conveniently and quickly.

It should be noted that, in the embodiments, the reduced-thickness portion is a specific portion of the connection rib 126 whose thickness is reduced compared with the original normal thickness of the connection rib 126. For example, the original thickness of the connection rib 126 is 1 mm, and at the specified position of the pre-cut portion 1261, the thickness of the connection rib is reduced to 0.5 mm by using a specific machining process (such as grinding or milling) to form an area having a relatively small thickness. The reduced-width portion is a specific portion of the connection rib 126 whose width is reduced compared with the original normal width of the connection rib 126. In other words, the width of the connection rib 126 in a specific area becomes smaller. For example, the original width of the connection rib 126 is 3 mm, and the width is reduced by 1 mm at the position of the pre-cut portion 1261 by means of cutting, punching, or the like, to form a portion having a relatively small width.

In specific embodiments, as shown in FIG. 17 and FIG. 18, in the step of disposing a pre-cut portion 1261 on each of the connection ribs 126, a pre-cut recess 1262 is disposed on at least one side edge of an end portion of the connection rib 126 connected to the corresponding main body portion 121, to form the pre-cut portion 1261.

In the embodiments, the pre-cut portion 1261 on the connection rib 126 corresponds to the structure of the recess 1112 disposed on the side portion of the connection rib 126. In this way, the pre-cut recess 1262 is disposed on the side edge of the end portion of the connection rib 126 connected to the main body portion 121, such that the width of the connection rib 126 at the position where the connection rib is connected to the main body portion 121 becomes smaller, thereby helping disconnect the connection rib 126 from the position of the pre-cut recess 1262 in a subsequent step.

The pre-cut recess 1262 may be disposed on one side edge of the end portion, connected to the corresponding main body portion 121, of the connection rib 126, or the pre-cut recess 1262 may be disposed on each of two side edges of the end portion, connected to the corresponding main body portion 121, of the connection rib 126.

It can be understood that the pre-cut recess 1262 may be an arc-shaped recess, or may be a rectangular recess, or may be of another irregular notch structure, and so on.

In some embodiments, the width dimension B2 of the connection rib 126 along the direction perpendicular to the spacing direction between the two adjacent main body portions 121 is 1 mm to 3 mm.

The width of the connection rib 126 is set to be within the above-mentioned range, such that the connection rib 126 can play a role in connecting and positioning the adjacent main body portions 121. In addition, the width of the connection rib 126 is not excessively large, so as to reduce the difficulty of disconnection and machining. Moreover, an excessively large recessed hole 111 does not need to be disposed at the corresponding position of the housing main body 11 of the first housing 101 due to an excessively large width of the connection rib 126, thereby avoiding affecting the structural strength of the housing main body 11.

In specific embodiments, the width dimension of the connection rib 126 is 1 mm, 1.2 mm, 1.4 mm, 1.5 mm, 1.6 mm, 1.8 mm, 2.0 mm, 2.2 mm, 2.5 mm, 2.8 mm, 3 mm, or the like.

In some embodiments, the thickness of at least a part of a position of the connection rib 126 is less than the thickness of the main body portion 121.

The thickness of the connection rib 126 is set to be less than the thickness of the main body portion 121, such that the connection rib 126 can play a role in connecting and positioning the adjacent main body portions 121. In addition, the thickness of the connection rib 126 is not excessively large, so as to reduce the difficulty of disconnection and machining.

In specific embodiments, the thickness dimension of the connection rib 126 is 0.2 mm to 1.0 mm.

The thickness of the connection rib 126 is set to be within the above-mentioned range, such that the connection rib 126 can play a role in connecting and positioning the adjacent main body portions 121. In addition, the thickness of the connection rib 126 is not excessively large, so as to reduce the difficulty of disconnection and machining.

In specific embodiments, the thickness dimension of the connection rib 126 is 0.2 mm, 0.3 mm, 0.4 mm, 0.5 mm, 0.6 mm, 0.7 mm, 0.8 mm, 0.9 mm, 1.0 mm, or the like.

In some embodiments, the length dimension of the connection rib 126 is 5 mm to 25 mm in the spacing direction between the two adjacent main body portions 121.

The length of the connection rib 126 is set to be within the above-mentioned range, such that the spacing distance between the adjacent main body portions 121 can be controlled by designing the length of the connection rib 126, thereby ensuring that there is a suitable spacing between the main body portions 121 of the adjacent electrical connection members 12.

In specific embodiments, the length dimension of the connection rib 126 is 5 mm, 10 mm, 15 mm, 16 mm, 18 mm, 20 mm, 22 mm, 24 mm, 25 mm, or the like.

Further provided in another embodiment of the present application is a battery device 200, as shown in FIG. 2, comprising a case body 20, a battery cell assembly 30, and the above-mentioned high-voltage power distribution device 10, both the battery cell assembly 30 and the high-voltage power distribution device 10 being disposed in the case body 20. The high-voltage power distribution device 10 is electrically connected to the battery cell assembly 30, and the high-voltage power distribution device 10 is used to control charging, discharging and the like for the battery device 200.

Further provided in another embodiment of the present application is an electric apparatus. As shown in FIG. 1, the electric apparatus comprises the above-mentioned battery device 200, and the battery device 200 is used to supply electric energy to the electric apparatus.

The above descriptions of the various embodiments tend to emphasize differences between the various embodiments. For same or similar parts thereof, refer to these embodiments. For brevity, details are not described herein again.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A high-voltage power distribution device, **characterized by** comprising a first housing, the first housing comprising:
a housing main body, the housing main body being an insulated member; and
a plurality of electrical connection members each of the electrical connection members comprising a main body portion and a first connection portion led out from the main body portion, the main body portions all being embedded into the housing main body, and the first connection portions being spaced apart from each other and exposed to a surface of the housing main body, wherein
the plurality of electrical connection members are arranged at intervals from each other and form a spacing area between two adjacent main body portions, the surface of the housing main body is recessed inwardly to form several recessed holes, at least some of the recessed holes are located in the spacing area and each spacing area corresponds to at least one of the recessed holes.

2. The high-voltage power distribution device according to claim 1, **characterized in that** the two main body portions are arranged at an interval along a first direction, and the two main body portions are located on two opposite sides of the corresponding recessed hole along the first direction, respectively.

3. The high-voltage power distribution device according to claim 1, **characterized in that** at least three of the main body portions are sequentially arranged at intervals along the first direction, and the at least three sequentially arranged main body portions correspond to the same recessed hole.

4. The high-voltage power distribution device according to claim 2 or 3, **characterized in that**, along the first direction, the size of a portion of the main body portion located on a side portion of the recessed hole and protruding from a hole edge of the recessed hole is less than or equal to 1 mm.

5. The high-voltage power distribution device according to any one of claims 1 to 4, **characterized in that** the housing main body is provided with a plurality of recessed holes spaced apart, and among all spacing areas, at least some of the spacing areas correspond to a plurality of the recessed holes along an extension direction of the corresponding main body portion, respectively.

6. The high-voltage power distribution device according to any one of claims 1 to 5, **characterized in that** a spacing distance between parts of the two adjacent main body portions located on an inner side of the hole edge of the same recessed hole is greater than 3 mm.

7. The high-voltage power distribution device according to any one of claims 1 to 6, **characterized in that** the spacing distance between the parts of the two adjacent main body portions located on the inner side of the hole edge of the same recessed hole is greater than 9.5 mm.

8. The high-voltage power distribution device according to any one of claims 1 to 7, **characterized in that** the spacing distance between the parts of the two adjacent main body portions located on the inner side of the hole edge of the same recessed hole is greater than 19 mm.

9. The high-voltage power distribution device according to any one of claims 1 to 8, **characterized in that** the housing main body has a first surface and a second surface that are oppositely disposed, the main body portion is located between the first surface and the second surface, the recessed hole penetrates through the first surface and the second surface, and each spacing area penetrates through the first surface and the second surface by means of the corresponding recessed hole.

10. The high-voltage power distribution device according to claim 9, **characterized in that** the high-voltage power distribution device further comprises a second housing connected to the first housing, some of the recessed holes are first holes, the second housing is provided with at least one insulating protrusion at a position corresponding to each of the first holes, the insulating protrusion is inserted into the first hole at a position between the two adjacent main body portions, and at least one of the insulating protrusions is provided between the two adjacent main body portions that correspond to the same first hole.

11. The high-voltage power distribution device according to claim 10, **characterized in that**, along the direction from the second surface toward the first surface, the insulating protrusion extends into the first hole from the second surface, and the height of a protruding part of the insulating protrusion relative to the second surface is greater than the heights of protruding parts of the corresponding two main body portions relative to the second surface.

12. The high-voltage power distribution device according to claim 11, **characterized in that** one of the insulating protrusions is provided between the two adjacent main body portions, along a spacing direction between the two adjacent main body portions, the thickness of the insulating protrusion is L1 and spacing distances between the insulating protrusion and the two adjacent main body portions are L2 and L3 respectively, and along the direction pointing from the second surface to the first surface the heights of protruding parts of the insulating protrusion relative to the two adjacent main body portions are L4 and L5, respectively, wherein the sum of L1, L2, L3, L4, and L5 is greater than 3 mm.

13. The high-voltage power distribution device according to claim 12, **characterized in that** the sum of L1, L2, L3, L4, and L5 is greater than 9.5 mm.

14. The high-voltage power distribution device according to claim 12 or 13, **characterized in that** the sum of L1, L2, L3, L4, and L5 is greater than 19 mm.

15. The high-voltage power distribution device according to any one of claims 12 to 14, **characterized in that** the spacing distance between the insulating protrusion and the adjacent main body portion is greater than or equal to 1 mm.

16. The high-voltage power distribution device according to any one of claims 10 to 15, **characterized in that**, along a direction perpendicular to the spacing direction between the two adjacent main body portions, at least one of two opposite side walls of the first hole is provided with a recess, and a side portion of the insulating protrusion corresponding to the recess is clamped into the recess.

17. The high-voltage power distribution device according to claim 16, **characterized in that**, along the direction perpendicular to the spacing direction between the two adjacent main body portions, each of the two opposite side walls of the first hole is provided with the recess, and two opposite side portions of the insulating protrusion are clamped into the corresponding recesses, respectively.

18. The high-voltage power distribution device according to any one of claims 1 to 17, **characterized in that** the width dimension of the recessed hole along the direction perpendicular to the spacing direction between the two adjacent main body portions is 4 mm to 6 mm.

19. The high-voltage power distribution device according to any one of claims 1 to 18, **characterized in that** the housing main body is further provided with an interface for adaptive insertion of an external electrical connector, the interface has an accommodating cavity penetrating through the surface of the housing main body, each of the electrical connection members further comprises a second connection portion, the second connection portion is exposed to a cavity wall surface of the accommodating cavity and is located in the accommodating cavity and the second connection portion is used to electrically connect to the electrical connector inserted into the interface.

20. The high-voltage power distribution device according to claim 19, **characterized in that** the second connection portion protrudes from the cavity wall surface of the accommodating cavity and is disposed toward an opening of the accommodating cavity.

21. The high-voltage power distribution device according to any one of claims 18 to 20, **characterized in that** some of the electrical connection members are first connection members, the others of the electrical connection members are second connection members, the interface comprises a first interface and a second interface that are disposed at an interval, the second connection portion of each of the first connection members is located in the accommodating cavity of the first interface, and the second connection portion of each of the second connection members is located in the accommodating cavity of the second interface.

22. The high-voltage power distribution device according to claim 21, **characterized in that** the first interface and the second interface are disposed at the same side of the housing main body or the first interface and the second interface are disposed at different sides of the housing main body.

23. The high-voltage power distribution device according to claim 21 or 22, **characterized in that** the first connection portion of each of the first connection members is connected to a low-voltage loop in the high-voltage power distribution device, and/or the first connection portion of each of the second connection members is connected to a high-voltage loop in the high-voltage power distribution device.

24. The high-voltage power distribution device according to any one of claims 21 to 23, **characterized in that**, in the first interface, a clearance distance between two adjacent second connection portions is greater than 3 mm, or a creepage distance between two adjacent second connection portions is greater than 3 mm;
and/or in the second interface, a clearance distance between two adjacent second connection portions is greater than 3 mm, or a creepage distance between two adjacent second connection portions is greater than 3 mm;
and/or a clearance distance between the first interface and the second interface is greater than 3 mm, or a creepage distance between the first interface and the second interface is greater than 3 mm.

25. The high-voltage power distribution device according to any one of claims 22 to 24, **characterized in that** the housing main body is further provided with a first identification portion and a second identification portion, the first identification portion is disposed at a side portion of the first interface, the second identification portion is disposed at a side portion of the second interface, and the first identification portion and the second identification portion have different identifiers.

26. The high-voltage power distribution device according to any one of claims 1 to 25, **characterized in that** a spacing distance between the two adjacent main body portions is 5 mm to 25 mm.

27. The high-voltage power distribution device according to any one of claims 1 to 26, **characterized in that** the width dimension of the electrical connection member along a direction perpendicular to an extension direction of the electrical connection member is 0.5 mm to 10 mm.

28. The high-voltage power distribution device according to any one of claims 1 to 27, **characterized in that** the thickness dimension of the electrical connection member along the recess direction of the recessed hole is 0.5 mm to 2.5 mm.

29. A forming method for a housing structure of a high-voltage power distribution device, **characterized by** comprising:
manufacturing a plurality of electrical connection members, wherein each of the electrical connection members comprises a main body portion, and the main body portions of two adjacent electrical connection members are disposed at an interval and connected by means of a connection rib;
integrally injection molding the main body portions of the electrical connection members and embedding the main body portions into the same housing main body, and reserving a recessed hole at a position of the housing main body directly facing the connection rib; and
disconnecting the corresponding connection rib at the position of the recessed hole, to obtain the housing structure.

30. A forming method for a housing structure of a high-voltage power distribution device, **characterized by** comprising:
manufacturing a plurality of electrical connection members, wherein each of the electrical connection members comprises a main body portion, and the main body portions of two adjacent electrical connection members are disposed at an interval and connected by means of a connection rib;
integrally injection molding the main body portions of the electrical connection members and embedding the main body portions into the same housing main body, and reserving a recessed hole at a position of the housing main body directly facing the connection rib;
disconnecting the corresponding connection rib at the position of the recessed hole, to obtain a first housing;
manufacturing a second housing provided with several insulating protrusions protruding from a surface thereof, wherein dimensions of the insulating protrusions are adapted to dimensions of at least some of the recessed holes; and
connecting the first housing and the second housing, and inserting the insulating protrusions into the recessed holes adapted to the insulating protrusions at a position between two adjacent main body portions, to obtain the housing structure.

31. The forming method for a housing structure of a high-voltage power distribution device according to claim 29 or 30, **characterized in that**, in the step of manufacturing a plurality of electrical connection members, a first connection portion is formed on the main body portion (121) of each of the electrical connection members; and
in the step of integrally injection molding the main body portions of the electrical connection members and embedding the main body portions into the same housing main body, the first connection portion is placed outside a mold cavity for forming the housing main body, such that the first connection portion is exposed to a surface of the housing main body, and the first housing is obtained.

32. The forming method for a housing structure of a high-voltage power distribution device according to any one of claims 29 to 31, **characterized in that**, in the step of manufacturing a plurality of electrical connection members, a pre-cut portion is disposed on each of the connection ribs, and the pre-cut portion comprises at least one of a reduced-thickness portion and a reduced-width portion.

33. The forming method for a housing structure of a high-voltage power distribution device according to claim 32, **characterized in that**, in the step of disposing a pre-cut portion on each of the connection ribs, a pre-cut recess is disposed on at least one side edge of an end portion of the connection rib connected to the corresponding main body portion, to form the pre-cut portion.

34. The forming method for a housing structure of a high-voltage power distribution device according to claim 32 or 33, **characterized in that**, along a direction perpendicular to a spacing direction between the two adjacent main body portions, the width dimension of the connection rib is 1 mm to 3 mm; and/or the thickness of at least a part of a position of the connection rib is less than the thickness of the main body portion; and/or the thickness dimension of the connection rib is 0.2 mm to 1.0 mm.

35. The forming method for a housing structure of a high-voltage power distribution device according to any one of claims 29 to 34, **characterized in that** the length dimension of the connection rib along the spacing direction between the two adjacent main body portions is 5 mm to 25 mm.

36. A battery device, comprising a battery cell assembly and the high-voltage power distribution device according to any one of claims 1 to 28, the high-voltage power distribution device being electrically connected to the battery cell assembly.

37. An electric apparatus, comprising the battery device according to claim 36, the battery device being used to supply electric energy to the electric apparatus.
